(19) Europäisches Patentamt / European Patent Office / Office européen des brevets

(11) **EP 2 401 310 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(21) Anmeldenummer: **10706583.1**

(22) Anmeldetag: **19.02.2010**

(51) Int Cl.:
**C08F 218/08** (2006.01)    **C08F 2/00** (2006.01)
**C08F 2/22** (2006.01)      **C08F 2/24** (2006.01)
**C08F 2/30** (2006.01)      **C08F 210/02** (2006.01)

(86) Internationale Anmeldenummer:
**PCT/EP2010/052103**

(87) Internationale Veröffentlichungsnummer:
**WO 2010/097340 (02.09.2010 Gazette 2010/35)**

(54) **VERFAHREN ZUR HERSTELLUNG VON VINYLACETAT-ETHYLEN-MISCHPOLYMERISATEN MITTELS EMULSIONSPOLYMERISATION**

PROCESS FOR PRODUCING VINYL ACETATE/ETHYLENE COPOLYMERS BY MEANS OF EMULSION POLYMERIZATION

PROCÉDÉ DE PRÉPARATION DE POLYMÉRISATS MIXTES VINYLACÉTATE/ÉTHYLÈNE PAR POLYMÉRISATION EN ÉMULSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.02.2009 DE 102009001097**

(43) Veröffentlichungstag der Anmeldung:
**04.01.2012 Patentblatt 2012/01**

(73) Patentinhaber: **Wacker Chemie AG**
**81737 München (DE)**

(72) Erfinder:
• **ZECHA, Helmut**
  **84489 Burghausen (DE)**
• **KÖGLER, Gerhard**
  **84508 Burgkirchen (DE)**

(74) Vertreter: **Schuderer, Michael et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 0 890 625**

**Beschreibung**

Die Erfindung betrifft ein Verfahren zur Herstellung von Vinylacetat-Ethylen-Mischpolymerisaten mittels Emulsionspolymerisation zur Herstellung von Klebemitteln mit verbesserter Adhäsions-Kohäsions-Balance. Insbesondere betrifft die Erfindung ein Verfahren zur Herstellung von Vinylacetat-Ethylen-Mischpolymerisaten mittels Emulsionspolymerisation zur Herstellung von Klebemitteln zur Verklebung von Polymersubstraten mit cellulosischen Materialien, bevorzugt von Polystyrol- und Polyethylenterephthalat-Folien mit Papier bzw. Pappe, mit verbesserter Adhäsions-Kohäsions-Balance.

Verfahren der Emulsionspolymerisation von Vinylacetat (VAC) mit Ethylen, gegebenenfalls mit weiteren Comonomeren, in wässriger Phase zur Herstellung von Polymerdispersionen, sind lange bekannt. Zur Erzielung kolloider Stabilität der erzeugten Dispersionen werden dabei im Polymerisationsverfahren wasserlösliche Polymere wie zum Beispiel Polyvinylalkohole, Cellulosederivate und Polyvinylpyrrolidone als sogenannte Schutzkolloide oder niedermolekulare grenzflächenaktive Substanzen, sogenannte Emulgatoren oder Tenside, eingesetzt. Es ist auch lange gut bekannt, zur Erzielung guter kolloider Stabilität und/oder zur Regulierung der Teilchengrößen, Kombinationen von Polyvinylalkoholen und Emulgatoren während der Polymerisation einzusetzen.

Die DE-OS 1595402 beschreibt ein Verfahren, bei welchem zur Verbesserung der Ethylen-Einbaurate in Vinylacetat-EthylenCopolymere, mindestens 75 % des Vinylacetat-Monomers vorgelegt werden. Die Polymerisation erfolgt in Gegenwart von nichtionischen Emulgatoren. In der DE-OS 2112769 wird zur Gewährleistung eines gleichmäßigen Polymerisationsverlaufs empfohlen, bei der Copolymerisation von Vinylestern mit Ethylen ein Redoxinitiatorsystem einzusetzen, das Reduktionsmittel mit dem Vinylesteranteil, dem Ethylen sowie den Dispergiermitteln vollständig vorzulegen und nur die Oxidationskomponente zuzudosieren. In der US-A 3644262 wird ein Verfahren zur Herstellung von VAE-Dispersionen beschrieben, welches zu verbesserten Ethyleneinbauraten führt. Dazu wird der Vinylacetat-Anteil und der Emulgator- und/oder Schutzkolloidanteil vollständig dosiert oder in nur sehr geringen Anteilen vorgelegt. Dieses Verfahren erlaubt es bis zu etwa 20 % Ethylen im Copolymer bei niederen Drücken und Temperaturen einzubauen. Nachteilig ist, dass keines der hergestellten Produkte ausreichende Adhäsion zwischen Polymersubstraten und Papier oder Pappe gewährleistet.

Die so erzeugten wässrigen Polymerdispersionen auf Basis von Vinylacetat und Ethylen (VAE-Dispersionen) können vorteilhaft als Bindemittel, insbesondere für Klebstoffe, Farben oder zur Faser-/Vliesbindung, verwendet werden. Die Anforderungen an das Eigenschaftsprofil solcher VAE-Dispersionen wurden im Laufe der Jahre immer spezifischer. So ist beim Einsatz als Klebstoff beispielsweise der Trend zu verzeichnen, dass spezielle Anforderungen an das Verkleben von Materialien mit geringer Oberflächenenergie gestellt werden, zum Beispiel beim Verkleben von Polymerfolien mit cellulosischen Materialien, speziell mit Papier und Pappe. Übliche VAE-Dispersionen sind hierfür nicht geeignet, weil sie eine zu geringe Adhäsion des Klebeverbundes bereitstellen. Es sind deswegen verschiedene Versuche unternommen worden, VAE-Dispersionen mit verbesserter Adhäsion zur Verfügung zu stellen.

Die US-A 3708388 beschreibt Klebemittel auf Basis von Vinylacetat-Ethylen-Copolymeren, welche ausschließlich mit Alkylphenolethoxylat-Emulgator(en) oder mit Schutzkolloid und solchen Emulgatoren stabilisiert sind, eine definierte Grenzviskositätszahl (intrinsic viscosity) aufweisen und zur Laminierung von Filmen eingesetzt werden können. Bei der Herstellung werden mindestens 75 % des Vinylacetats (in den Beispielen 96,5 % bis 100 %) vorgelegt. Zur Verbesserung der mechanischen Festigkeit bei hohen Temperaturen wird der Einsatz von Vernetzern empfohlen.

Die EP 1212383 B1 beschreibt ein Verfahren zur Herstellung von Klebemitteln mit verbesserter Adhäsion. Dazu werden wässrigen Dispersionen, erzeugt durch Emulsionspolymerisation, nach Abschluss der Polymerisation nachträglich 0,3 bis 3,0 Gew.-%, bezogen auf das Gesamtgewicht der Dispersion, ein oder mehrere Emulgatoren zugesetzt. Die Schrift lehrt, dass eine Verbesserung der Adhäsion nur bei nachträglicher Zugabe des Emulgators eintritt, wohingegen ein Einsatz von Emulgator während der Polymerisation zu keiner Verbesserung der Adhäsion führen soll. Nachteilig bei dieser Vorgehensweise ist, dass kein ausgewogenes Verhältnis von Adhäsion und Kohäsion bereitgestellt wird, die Adhäsion zu Polystrol- und Polyesterfilmen viel zu gering ist, und die Abbindegeschwindigkeit der Dispersionen zu niedrig ist.

In der EP 890625 B1 wird ein verbessertes Vinylacetat-Ethylen-(VAE)-Latex-Polymer, und ein Prozess zu dessen Herstellung beschrieben, das als Klebstoff für Verpackung und für schwierig zu verklebende Oberflächen wie Polyethylen, Polyester, metallisiertes Polyester und orientiertes Polypropylen geeignet sein soll. Das Polymer wird mittels bestimmter temperaturabhängiger Werte des Speichermoduls bei einer definierten Testfrequenz charakterisiert. Zur Herstellung wird der Einsatz von Reglern empfohlen und im Polymerisationsprozess weniger als 15 % des Vinylacetat in der Reaktorvorlage vorgelegt, sowie der Vinylacetat-Gehalt während der Polymerisation kleiner 5 % gehalten. Damit erhältliche Polymerdispersionen besitzen tatsächlich eine hohe Adhäsion von schwierig zu verklebenden Polymerfilmen auf Papier oder Textil. Der Nachteil des so erzeugten Polymeren ist aber, dass die Kohäsion der Klebeverbindung wesentlich zu niedrig ist, da das Anforderungsprofil für den Speichermodul keine ausreichend hohe Kohäsion zulässt. Zudem wird als Emulgator Alkylphenolethoxylat mit 4 bis 100 Ethylenoxid-Einheiten verwendet. Solche Emulgatoren sind aber wegen deren Umwelt- und Gesundheitsbelastung äußerst problematisch.

Die EP 385734 B1 beschreibt ein VAE-Copolymer und ein Polymerisationsverfahren zur Herstellung desselben, welches eine wässrige Polymerdispersion mit einem Feststoffgehalt von 65 bis 75 % liefert. Das VAE-Copolymer soll als Klebstoff für unterschiedlichste Substrate mit hoher Abbindegeschwindigkeit geeignet sein. Zur Herstellung wird ein Dispergiermittelgemisch aus teilverseiftem Polyvinylalkohol und einem nichtionischen Polyoxyethylen-Emulgator mit definierter HLB eingesetzt. Das Polymerisationsverfahren ist dadurch charakterisiert, dass in eine wässrige Lösung, enthaltend den gesamten Polyvinylalkohol, den gesamten Emulgator und das gesamte Reduktionsmittel, 40 bis 90 Gew.-% des Vinylacetats einemulgiert werden, so dass eine stabile Emulsion entsteht und anschließend nach Aufdrücken von Ethylen die restlichen 10 bis 60 Gew.-% des Vinylacetats zudosiert werden. Als Besonderheit des Prozesses wird herausgestellt, dass 40 bis 90 % des Vinylacetats im Voremulsionsschritt eingesetzt werden, und die Restmenge während der Polymerisation dosiert wird. Das Verfahren führt nicht zu einer ausgewogenen Balance zwischen Adhäsion und Kohäsion; die Adhäsion zu Polystyrol- und Polyesterfilmen ist zu niedrig.

Die US-A 4267090 beschreibt ein Verfahren zur Herstellung von VAE-Dispersionen, mit dem Ziel der Verbesserung der Benetzbarkeit von Polyvinylchlorid-Substrat und der Abbindegeschwindigkeit, bei unverändert hoher oder verbesserter Kohäsion, durch Einsatz definierter Mengen an Emulgator (nicht weniger als 1 % und nicht mehr als 2 %). Das Polymerisationsverfahren ist weiter dadurch charakterisiert, dass das Vinylacetat und der Emulgatoranteil teilweise vorgelegt und teilweise dosiert werden. Der Schutzkolloidanteil und das Oxidationsmittel werden in der US-A 4267090 vollständig vorgelegt. Polymerisate nach US-A 4267090 führen nicht zur gewünschten ausgewogenen Balance von Adhäsion und Kohäsion und stellen nur unzureichende Adhäsionswerte für Polystyrol- und Polyesterfolien bereit. Zur Erzielung der geforderten Kohäsion, ermittelt mit Creep-Test, soll die "inherent viscosity" einen Wert von mindestens 1,9 dl/g (mit den Angaben in US 4267090 entsprechend einer Grenzviskositätszahl von 1,95 dl/g) für das in konzentrierter Essigsäure vollständig verseifte Polymer aufweisen. Für das unverseifte VAE-Polymer mit einem Ethylenanteil gemäß angeführter Beispiele von 13,6 Gew.-%, bezogen auf Gesamtmonomer, ist die Molmasse um den Faktor 1,73 höher als für das vollverseifte Polymer. Gemäß der bekannten Relation von Viskositätsmittel der Molmasse M und Grenzviskositätszahl $[\eta]$ (H. G. Elias, Polymere, Von Monomeren und Makromolekülen zu Werkstoffen; Hüthing & Wepf Verlag, 1996, Seite 202 ff) : $[\eta] = a \, M^{\alpha}$ (mit $\alpha = 0{,}764$), ist demnach die Grenzviskositätszahl des unverseiften Polymeren um den Faktor 1,52 höher und beträgt also mindestens $[\eta] = 2{,}96$ dl/g (entsprechend einem K-Wert des Polymeren von mindestens 125).

In der US-A 5571860 wird vorgeschlagen, zur Verbesserung der Abbindegeschwindigkeit, Wärmebeständigkeit und Adhäsion von Klebemitteln auf Basis von Vinylacetat-Ethylen-Copolymerisaten, N-Vinylformamid oder N-Vinylpyrrolidon cozupolymerisieren. Die Wärmebeständigkeit wird weiterhin verbessert durch Einbeziehung von 0,5 bis 10 Gew.-% an vernetzbarem Monomer, insbesondere Glycidylmethacrylat (GMA). Der verwendete Polymerisationsprozess sieht vor, dass 70 % des eingesetzten Vinylacetats zusammen mit 90 % der eingesetzten Dispergiermittel im Reaktor vorgelegt werden und der Rest dosiert wird. Als Dispergiermittel wird Polyvinylalkohol, gegebenenfalls im Gemisch mit Emulgator, eingesetzt. Nachteilig ist die Copolymerisation von N-Vinylformamid oder N-Vinylpyrrolidon, welche relativ hohe Polymerisationstemperaturen und damit relativ hohe Drücke erfordert und den Einbau von Ethylen erschwert.

Die EP 279384 B1 beschreibt die Herstellung von Vinylacetat-Ethylen-Copolymerdispersionen, welche sich als Verpackungsklebstoffe eignen. Es wurde gefunden, dass sich bei der Verwendung einer Kombination von niedermolekularem Polyvinylalkohol und nichtionischem Emulgator zur Stabilisierung der Dispersion, die Abbindegeschwindigkeit des Klebemittels, selbst bei hohem Festgehalt verbessert. Bei der Polymerisation wird der niedermolekulare Polyvinylalkohol zumindest teilweise vorgelegt und der Emulgatoranteil vollständig vorgelegt. Nachteilig bei dem damit erhaltenen Produkt ist eine viel zu geringe Adhäsion zwischen cellulosischem Substrat und Polystyrol- oder Polyesterfolien.

Aufgabe der US-A 3769151 war die Bereitstellung eines VAE-Klebstoffes mit verbesserter Adhäsion zu Polymerfilmen, insbesondere zu Vinylpolymeren. Beschrieben wird ein Prozess der Saat-Emulsionpolymerisation von Vinylacetat, Ethylen und bis zu 1 Gew.-% ungesättigten Säuren, unter Verwendung eines Gemisches aus teilverseiften und vollverseiften Polyvinylalkoholen, wobei für die Herstellung der Saat nur teilverseifter Polyvinylalkohol, und in der Saat-Polymerisation ein Blend mit höher-verseiftem Polyvinylalkohol eingesetzt wird. Weiter wird beschrieben, dass zusätzlich während der Polymerisation andere Additive eingesetzt werden können, ohne dass die Klebstoffeigenschaften substantiell beeinflusst werden. Als Beispiele für solche Additive, die keinen Einfluss auf die adhäsiven und kohäsiven Eigenschaften der VAE-Dispersion haben sollen, werden nichtionische, kationische oder anionische Emulgatoren aufgeführt. Wässrige Polymerisate nach US-A 3769151 besitzen eine gute Kohäsion, aber die Adhäsion, insbesondere zu Polystyrol und Polyester, ist viel zu gering und damit völlig unzureichend.

Die GB-A 1546275 beschreibt ein Verfahren zum Erhalt von VAE-Dispersionen, welche bei der Verwendung als Haftklebemittel ein gute Balance bezüglich Tack, Kohäsion und Adhäsion aufweisen. Wie die Beispiele, die ausschließlich Hydroxyethylcellulose als Schutzkolloid verwenden, und die Vergleichsbeispiele zeigen, ist zur Erzielung guter Adhäsion der Einsatz von Kettenreglern und ein Schutzkolloidanteil nicht über 1 Gew.-%, bezogen auf Gesamtmonomer, erforderlich. Die GB-A 1546275 fordert zudem Grenzviskositätszahlen zwischen 0,6 und 1,0 dl/g. Die so erhaltenen Produkte besitzen zwar gute Adhäsionseigenschaften, nachteilig ist jedoch eine zu geringe Kohäsion und eine zu geringe Abbindegeschwindigkeit.

Der vorliegenden Erfindung lag daher die Aufgabe zugrunde, die Nachteile üblicher VAE-Dispersionen bezüglich zu geringer Adhäsion des daraus erzeugten Klebefilms zu Polymersubstraten deutlich zu verbessern und dabei die Nachteile von bekannten Polymerisaten, welche zur Verbesserung der Adhäsion den gesonderten Zusatz von Kettenreglern (chain transfer agents) erfordern, bezüglich zu geringer Kohäsion zu überwinden und damit eine wässrige VAE-Dispersion bereitzustellen, die als Klebstoff eine wesentlich ausgewogenere Balance zwischen adhäsiven und kohäsiven Eigenschaften besitzt.

Es sollte eine VAE-Dispersion bereitgestellt werden, deren Klebefilm im Klebeverbund über eine ausreichend hohe Kohäsion verfügt und gleichzeitig eine hohe Adhäsion gegenüber schwer zu verklebenden Substraten, wie Polymerfolien, insbesondere Polystyrolfolien und Polyesterfolien, aufweist. Konkret sollte die Kohäsion, gemessen als Wärmestandfestigkeit mindestens 0,2 N/mm$^2$, bevorzugt mindestens 0,3 N/mm$^2$ betragen und gleichzeitig folgende Adhäsionswerte resultieren:

> (i) > 3,5 N/cm, vorzugsweise wenigstens 4,1 N/cm Schälfestigkeit für Polyethylenterephthalat-Folie Hostaphan® RN125 (PET-Folie) verklebt mit Baumwolle bei einer Abzugsgeschwindigkeit von 10 mm/min und/oder
> (ii) wenigstens 2,0 N/cm, vorzugsweise wenigstens 2,5 N/cm Schälfestigkeit für Polyethylenterephthalat-Folie Hostaphan® RN125 (PET-Folie) verklebt mit Baumwolle bei einer Abzugsgeschwindigkeit von 900 mm/min und
> (iii) wenigstens 4,2 N/cm, bevorzugt wenigstens 4,5 N/cm, besonders bevorzugt wenigstens 5,0 N/cm für Polystyrol-Folie Sidaplax® Polyflex 90 verklebt mit Baumwolle bei einer Abzugsgeschwindigkeit von 5 mm/min.

Aufgabe dieser Erfindung war es ebenso, ein Verfahren der Emulsionspolymerisation bereitzustellen, dass es erlaubt, die Adhäsion des Klebefilms auf zwei verschiedenen Polymersubstraten, insbesondere auf Polystyrol und auf Polyethylenterephthalat, um mindestens 20% gegenüber einem, auf sonst identische Weise, aber in Abwesenheit von Emulgatoren, hergestellten Produkt zu erhöhen.

Es ist weiterhin Aufgabe der vorliegenden Erfindung, eine VAE-Dispersion bereitzustellen, die neben der verbesserten Adhäsions-Kohäsions-Balance eine hohe Abbindegeschwindigkeit des Klebefilms gewährleistet, das heißt eine Anzugsgeschwindigkeit (AZG) von wenigstens 2 Sekunden, vorzugsweise von wenigstens 1,5 Sekunden, ermöglicht. Die VAE-Dispersion mit verbesserter Adhäsions-Kohäsions-Balance und schneller Abbindegeschwindigkeit sollte des Weiteren gute Maschinenlaufeigenschaften besitzen. Bei der Herstellung der VAE-Dispersion sollte aufgabengemäß auf Saatlatex, Kettenregler und Emulgatoren auf Basis von Alkylphenolethoxylate verzichtet werden können. Die VAE-Dispersion mit verbesserter Adhäsions-Kohäsions-Balance sollte weiterhin einen Festgehalt von mindestens 56 Gew.-%, vorzugsweise von mindestens 58 Gew.-%, eine Viskosität, gemessen als Brookfield-Viskosität Bf20, im Bereich zwischen etwa 1000 und etwa 10000 mPas und des weiteren einen geringen grobpartikulären Anteil (Siebrückstand > 40 $\mu$m) von kleiner etwa 500 ppm besitzen.

Gegenstand der Erfindung ist ein Verfahren zur Herstellung von Vinylacetat-Ethylen-Mischpolymerisaten mittels radikalisch initiierter Emulsionspolymerisation von Vinylacetat und 18 bis 34 Gew.-% Ethylen, bezogen auf das Gesamtgewicht der Monomere Vinylacetat und Ethylen, und gegebenenfalls weiterer Comonomere, dadurch gekennzeichnet, dass in Gegenwart von mindestens einem Schutzkolloid und von 0,5 bis 4 Gew.-%, bezogen auf die Gesamtmenge an Monomeren, von mindestens einem nichtionischen, ethoxylierten Emulgator mit verzweigtem oder linearem Alkylrest oder in Form von Ethylenoxid-Propylenoxid-Copolymeren, und unter Ausschluss von Kettenregler, polymerisiert wird, wobei vor der Initiierung der Polymerisation 10 bis 70 Gew.-% des Vinylacetat-Monomeren und 40 bis 100 Gew.-% des Ethylen-Monomeren vorgelegt werden, der Schutzkolloid-Anteil zu bis zu 100 Gew.-% vorgelegt wird, der Emulgator-Anteil zu mindestens 25 Gew.-% vorgelegt wird, und die restlichen Anteile an Monomeren, Schutzkolloid und Emulgator während der Polymerisation zudosiert werden, wobei so vorgegangen wird, dass das Verfahrenskriterium COP (criterion of process) 2,5 ≤ COP ≤ 70 erfüllt wird, wobei gilt

COP = 100 x (ETM$^{2,5}$ x ETV$^{1,25}$ x EA$^{2,5}$ x EV$^{1,5}$ x VV$^{-1}$), mit

ETM = MEt/MM, ETV = MEtV/MEt, EA = 100 ME/NM, EV = MEV/ME und VV = MVacV/MVac, mit

MEt = Gesamtmasse Ethylen in kg, MM = Gesamtmasse Monomer in kg, MEtV = Masse Ethylen-Vorlage in kg, ME = Gesamtmasse Emulgator in kg; MEV = Masse Emulgator-Vorlage in kg; MVacV = Masse Vinylacetat-Vorlage in kg, und MVac = Gesamtmasse Vinylacetat in kg.

Im Allgemeinen beträgt der Vinylacetat-Anteil 66 bis 82 Gew.-%, vorzugsweise 68 bis 80 Gew.-%, besonders bevorzugt 68 bis 78 Gew.-%, und am meisten bevorzugt 68 bis 76 Gew.-%, jeweils bezogen auf das Gesamtgewicht der Monomere Vinylacetat und Ethylen.

Der Ethylenanteil beträgt vorzugsweise 20 bis 32 Gew.-%, besonders bevorzugt 22 bis 32 Gew.-%, und am meisten bevorzugt 24 bis 32 Gew.-%, jeweils bezogen auf das Gesamtgewicht der Monomere Vinylacetat und Ethylen.

Neben Vinylacetat und Ethylen können gegebenenfalls zur Erweiterung des Polymereigenschaftsprofils, und wenn die positiven Eigenschaften bezüglich Adhäsions-Kohäsions-Balance dadurch nicht abgeschwächt, sondern allenfalls verbessert werden, noch weitere, damit copolymerisierbare Comonomere polymerisiert werden. Beispiele hierfür sind Vinylester von Carbonsäuren mit 3 bis 18 C-Atomen. Bevorzugte Vinylester sind Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 9 bis 11 C-Atomen, beispielsweise VeoVa9® oder VeoVa10® (Handelsnamen der Firma Hexion). Geeignete weitere Comonomeren sind auch solche aus der Gruppe der Ester der Acrylsäure oder Methacrylsäure von unverzweigten oder verzweigten Alkoholen mit 1 bis 15 C-Atomen. Bevorzugte Methacrylsäureester oder Acrylsäureester sind Ester wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Geeignete Comonomere sind auch Vinylhalogenide wie Vinylchlorid, oder Olefine wie Propylen.

Vorzugsweise wird kein N-Vinylformamid oder N-Vinylpyrrolidon copolymerisiert. Der Anteil solcher Comonomere, bezogen auf die Gesamtmenge an Vinylacetat und Ethylen, kann zwischen etwa 1 und 40 Gew.-%, bevorzugt zwischen etwa 5 und 25 Gew. -%, betragen.

Gegebenenfalls können noch 0,05 bis 10 Gew.-%, bezogen auf die Gesamtmenge an Vinylacetat und Ethylen, weitere Monomere (Hilfsmonomere) copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Am meisten bevorzugt werden Vinylacetat-Ethylen-Mischpolymerisate ohne weitere Comonomereinheiten oder Hilfsmonomere.

Das mittlere Molekulargewicht der Vinylacetat-Ethylen-Mischpolymerisate wird, wie in der industriellen Praxis üblich und verbreitet, durch den K-Wert nach Fikentscher (H. Fikentscher, Cellulosechemie 13(1932)58; vergl. auch in W. Philippoff: Viskosität der Kolloide, Verlag von Theodor Steinkopff, 1942, S. 172), erhalten aus Viskositätsmessungen unter Beachtung von DIN 51562, charakterisiert. Der K-Wert der Vinylacetat-Ethylen-Mischpolymerisate beträgt $75 \leq$ K-Wert < 125, bevorzugt 75 bis 120, mehr bevorzugt 80 bis 115, besonders bevorzugt 80 bis 110 und insbesondere 85 bis 105. Der K-Wert nach Fikentscher korreliert in eindeutiger Weise mit der Grenzviskositätszahl $[\eta]$ nach Staudinger (vergl. z.B. P. J. Flory, Principles of Polymer Chemistry, Cornell University Press, 1953, S. 308 ff); diese beträgt demnach erfindungsgemäß $1,14 \leq [\eta] < 2,91$ dl/g, bevorzugt $1,14$ d1/g $\leq [\eta] \leq 2,74$ dl/g, mehr bevorzugt $1,29$ dl/g $\leq [\eta]$ $2,53$ dl/g, besonders bevorzugt $1,29$ dl/g $\leq [\eta] \leq 2,33$ dl/g, und insbesondere $1,44$ dl/g $\leq [\eta] \leq 2,14$ dl/g.

Die Polymerisation erfolgt nach dem Emulsionspolymerisationsverfahren, wobei die Polymerisationstemperatur im Allgemeinen 40°C bis 100°C, vorzugsweise 50°C bis 90°C und im Besonderen 60° C bis 80° C beträgt. Der Polymerisationsdruck liegt im Allgemeinen zwischen 40 und 100 bar, bevorzugt zwischen 45 und 90 bar und variiert im Besonderen zwischen 45 und 85 bar in Abhängigkeit von der Ethylendosierung. Die Initiierung der Polymerisation erfolgt mit den für die Emulsionspolymerisation gebräuchlichen Redox-Initiator-Kombinationen.

Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,05 bis 2,0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumformaldehydsulfoxylat (Brüggolit®) und (Iso-)Ascorbinsäure sowie Weinsäure. Bevorzugt werden Natriumformaldehydsulfoxylat und (Iso-)Ascorbinsäure und deren Salze, wie z.B. Na-Isoascorbat, und Weinsäure. Die Reduktionsmittelmenge beträgt vorzugsweise 0,05 bis 3 Gew.-%, bezogen auf das Gesamtgewicht der Monomere.

Bevorzugt wird die Redox-Initiator-Kombination aus Wasserstoffperoxid und Na-Formaldehydsulfoxylat. Dabei wird Wasserstoffperoxid im Allgemeinen in einer Menge von 0,06 bis 0,4 Gew.-%, bevorzugt von 0,1 bis 0,3 Gew.-%, besonders bevorzugt 0,15 bis 0,25 Gew.-%, bezogen auf Gesamtmonomer, eingesetzt. Das Verhältnis von Oxidationsmittel zu Reduktionsmittel beträgt dann im Allgemeinen von 10 : 70 bis 10 : 3, bevorzugt von 10 : 60 bis 10 : 6, und ganz besonders bevorzugt von 10 : 60 bis 10 : 10 Gewichtsanteile.

Bevorzugte Schutzkolloide sind teilverseifte oder vollverseifte Polyvinylalkohole, sogenannte Standard-Polyvinylalkohole, mit einem mittleren Hydrolysegrad von 85 bis 99,9 Mol-%. Bevorzugt werden einerseits teilverseifte Standard-Polyvinylalkohole oder Mischungen solcher Polyvinylalkohole mit einem mittleren Hydrolysegrad von 86 bis 96 Mol-%. Besonders bevorzugt werden teilverseifte Polyvinylalkohole mit einem mittleren Hydrolysegrad von 86 bis 90 Mol-%, vorzugsweise jeweils mit einem massemittleren Polymerisationsgrad von 600 bis 2000. Zur Einstellung der Viskosität der resultierenden Polymerdispersion kann es vorteilhaft sein, Mischungen von Polyvinylalkoholen mit verschiedenem Polymerisationsgrad einzusetzen, wobei die Polymerisationsgrade der Einzelkomponenten kleiner oder größer sein können, als der massemittlere Polymerisationsgrad von 600 bis 2000 der Mischung.

Bevorzugt werden andererseits auch vollverseifte Standard-Polyvinylalkohole mit einem mittleren Hydrolysegrad von 96,1 bis 99,9 Mol-%, vorzugsweise mit einem mittleren Hydrolysegrad von 97,5 bis 99,5 Mol-% allein oder in Mischungen mit teilverseiften Standard-Polyvinylalkoholen, wobei die vollverseiften Polyvinylalkohole vorzugsweise durch einen massemittleren Polymerisationsgrad von 600 bis 3500 charakterisiert sind.

Es ist jedoch auch möglich, neben solchen Standard-Polyvinylalkoholen modifizierte Polyvinylalkohole, wie beispielsweise solche, die funktionelle Gruppen tragen, wie z.B. Acetoacetyl-Gruppen, oder solche, die Comonomereinheiten enthalten, wie z.B. Vinyllaurat-modifizierte oder Versaticsäure-Vinylestermodifizierte Polyvinylalkohole, oder - und bevorzugt - Ethylen-modifizierte Polyvinylalkohole, die beispielsweise unter dem Handelsnamen EXCEVAL® bekannt sind, allein oder in Kombination mit den genannten Standard-Polyvinylalkoholen, einzusetzen. Bevorzugte Ethylen-modifizierte Polyvinylalkohole haben einen Ethylen-Anteil bis zu 12 Mol-%, bevorzugt 1 bis 7 Mol-% und besonders bevorzugt 2 bis 6 Mol-%; insbesondere 2 bis 4 Mol-%. Der massemittlere Polymerisationsgrad beträgt jeweils von 500 bis 5000, bevorzugt 2000 bis 4500, und besonders bevorzugt 3000 bis 4000. Der mittlere Hydrolysegrad ist im Allgemeinen größer 92 Mol-%, bevorzugt 94,5 bis 99,9 Mol-%, und besonders bevorzugt 98,1 bis 99,5 Mol-%. Natürlich ist es auch möglich und gegebenenfalls vorteilhaft, Mischungen verschiedener ethylenmodifizierter Polyvinylalkohole allein oder in Kombination mit teilverseiften und/oder vollverseiften Standard-Polyvinylalkoholen zu verwenden.

Geeignete Schutzkolloide sind auch wasserlösliche Cellulosederivate, beispielsweise und bevorzugt Hydroxyethylcellulose, mit Viskositäten in 2 Gew.-%-igen wässrigen Lösungen von $\leq 6500$ mPas, bevorzugt von $\leq 3500$ mPas, besonders bevorzugt von $\leq 1500$ mPas und insbesondere von $\leq 500$ mPas. Geeignete Schutzkolloide sind weiterhin Polyvinylpyrrolidone mit K-Werten zwischen 10 und 30. Es kann auch vorteilhaft sein, Mischungen der genannten Polyvinylalkohole mit wasserlöslichen Cellulosederivaten und/oder Polyvinylpyrrolidonen oder Mischungen von wasserlöslichen Cellulosederivaten und Polyvinylpyrrolidonen einzusetzen. Wasserlöslich bedeutet, dass deren Löslichkeit in Wasser unter Normalbedingungen > 1 g / 100 ml Wasser beträgt.

Die Schutzkolloide werden im Allgemeinen in einer Menge von insgesamt 1 bis 4 Gew.-%, vorzugsweise 1,5 bis 3,5 Gew.-%, besonders bevorzugt 2 bis 3,5 Gew.-%, jeweils bezogen auf das Gesamtgewicht der Monomere, bei der Polymerisation zugesetzt.

Überraschend wurde gefunden, dass die Auswahl der während der Polymerisationsreaktion eingesetzten Emulgatoren nach Art und Menge ganz entscheidend die Adhäsions-Kohäsions-Balance der Vinylacetat-Ethylen-Mischpolymerisate kontrolliert. Polymerisate, die sich nur nach Art und Anteil der Emulgatoren unterscheiden, können im Vergleich zu auf gleiche Art hergestellten, emulgatorfreien Polymerisaten höhere oder geringere Adhäsionswerte auf unterschiedlichen Polymersubstraten aufweisen. Eine Adhäsionsverbesserung von mindestens 20 % auf mindestens zwei unterschiedlichen Polymersubstraten, wie z.B. auf Polyethylenterephthalat-Folie und auf Polystyrol-Folie, ist nur mit spezifischen Emulgatoren oder Emulgatorgemischen möglich. Alkylphenolethoxylate sollten wegen der bekannten Umwelt- und Gesundheitsprobleme ausgeschlossen werden.

Geeignete Emulgatoren sind nichtionische, ethoxylierte Emulgatoren mit verzweigtem oder linearem Alkylrest oder in Form von Ethylenoxid-Propylenoxid-Copolymeren. Bevorzugt werden ethoxylierte Fettalkohole, einschließlich Oxoalkohole, mit verzweigtem oder geradkettigem Alkylrest, wobei der Alkylrest 4 bis 40 C-Atome, vorzugsweise 8 bis 18 C-Atome aufweist und mit 2 bis 60, vorzugsweise 4 bis 40 Ethylenoxideinheiten ethoxyliert ist. Beispiele hierfür sind $C_{12}$- bis $C_{14}$-Fettalkohole mit 3 bis 40 Ethylenoxid-Einheiten, $C_{13}$- bis $C_{15}$-Fettalkohole (Oxoalkohole) mit 3 bis 40 Ethylenoxid-Einheiten, $G_{16}$- bis $C_{18}$-Fettalkohole mit 11 bis 60 Ethylenoxid-Einheiten, $C_{10}$- oder $C_{13}$-Fettalkohole (Oxoalkohole) mit 3 bis 40 Ethylenoxid-Einheiten, Polyoxyethylensorbitanmonooleat mit 20 Ethylenoxideinheiten. Besonders bevorzugte ethoxylierte Fettalkohole sind dabei die Polyethylenoxid-Ether mit 2 bis 60 Ethylenoxid-Einheiten von linearen Alkoholen (wie Oleylalkohol, Stearylalkohol) oder Isotridecylalkohol. Als nichtionische, ethoxylierte Emulgatoren bevorzugt werden auch Copolymere von Ethylenoxid (EO) und Propylenoxid (PO) mit einem Ethylenoxid-Anteil von 10 bis 40 Ges.-% und einer Molmasse von 1500 bis 3000. Besonders bevorzugt sind EO-PO-Copolymere mit einem EO-Anteil von 10 bis 30 Gew.-%. Vorteilhaft können auch Gemische der genannten Emulgatoren eingesetzt werden.

Wird nur ein einzelner Emulgator eingesetzt, werden nichtionische Isotridecylethoxylate mit 2 bis 60 EO-Einheiten bevorzugt, besonders bevorzugt mit 4 bis 40 EO-Einheiten, am meisten bevorzugt mit 4 bis 35 EO-Einheiten. Bevorzugt werden auch nichtionische ethoxylierte Fettalkohole mit 4 bis 40 EO-Einheiten, sowie Copolymere von Ethylenoxid (EO) und Propylenoxid (PO) mit einem Ethylenoxid-Anteil von 10 bis 30 Gew.-% und einer Molmasse von 1500 bis 3000.

Werden Gemische von Emulgatoren eingesetzt, werden Mischungen aus zwei nichtionischen ethoxylierten Isotridecylalkoholen bevorzugt, wobei eine Komponente 4 bis 18 EO-Einheiten enthält und die zweite Komponente 12 bis 40 EO-Einheiten aufweist. Bevorzugt werden auch Mischungen aus einem nichtionischen ethoxylierten Isotridecylalkohol mit 2 bis 60 EO-Einheiten und einem ethoxylierten, linearen nichtionischen Emulgator. Beispiele für mischbare, lineare nichtionische Emulgatoren sind lineare Fettalkohole mit 4 bis 40 EO-Einheiten, sowie Copolymere von Ethylenoxid (EO) und Propylenoxid (PO) mit einem Ethylenoxid-Anteil von 10 bis 40 Gew.-%.

Bevorzugt werden auch Mischungen aus einem oder mehreren nichtionischen ethoxylierten Isotridecylalkohol (en) mit 2 bis 60 EO-Einheiten und anionischen, bevorzugt ethoxylierten anionischen Emulgatoren. Beispiele für mischbare ethoxylierte anionische Emulgatoren sind lineare Alkylethersulfate auf Basis von linearen Fettalkoholen mit 4 bis 40 C-Atomen und 4 bis 40 EO-Einheiten oder Halbester der Sulfobernsteinsäure von linearen Fettalkoholen mit 4 bis 40 C-Atomen und 4 bis 40 EO-Einheiten. Der Anteil an anionischen, bevorzugt ethoxylierten anionischen Emulgatoren in der Mischung beträgt höchsten 50 Gew.-%, bevorzugt höchsten 30 Gew.-%, und besonders bevorzugt höchstens 20 Gew.-% bezogen auf das Gesamtgewicht der Emulgatormischung.

Der Emulgator wird im Allgemeinen in einer Menge von insgesamt 0,5 bis 4 Gew.-%, vorzugsweise 0,8 bis 3 Gew.-%, besonders bevorzugt 1,0 bis 2,5 Gew.-%, und am meisten bevorzugt 1,2 bis 2,2 Gew.-%, jeweils bezogen auf das Gesamtgewicht der Monomere, für die Polymerisation zugesetzt.

Für die Polymerisation werden vor deren Initiierung vom Vinylacetat-Anteil 10 bis 70 Gew.-%, bevorzugt 10 bis 50 Gew.-%, besonders bevorzugt 15 bis 50 Gew.-% und am meisten bevorzugt 22 bis 42 Gew.-% im Reaktor vorgelegt.

Vom Ethylenanteil werden 40 bis 100 Gew.-%, bevorzugt 50 bis 100 Gew.-% und insbesondere 50 bis 75 Gew.-% vor der Initiierung im Reaktor vorgelegt.

Werden außer Vinylacetat und Ethylen weitere Comonomere oder auch sogenannte Hilfsmonomere verwendet, so ist es möglich diese insgesamt vor der Initiierung im Reaktor vorzulegen oder insgesamt während der Reaktion zu dosieren. Solche Comonomere oder Hilfsmonomere können auch teilweise vorgelegt und teilweise dosiert werden.

Bis zu 100 Gew.-% der Schutzkolloide werden vor der Initiierung der Polymerisation im Reaktor vorgelegt, bevorzugt werden wenigstens 20 Ges.-%, besonders bevorzugt wenigstens 50 Gew.-% der Schutzkolloide vorgelegt, und am meisten bevorzugt werden 100 Gew.-% der Schutzkolloide vorgelegt.

Der Emulgatoranteil wird vor der Initiierung der Polymerisation zu 25 bis 100 Gew.-%, vorzugsweise mindestens zu 40 Gew.-%, besonders bevorzugt zu 55 bis 85 Gew.-% und am meisten bevorzugt zu 62 bis 82 Gew.-%, jeweils bezogen auf das Gewicht des insgesamt eingesetzten Emulgators, im Reaktor vorgelegt.

Der Initiator wird vorzugsweise insgesamt zudosiert. Bei Verwendung einer Redoxinitiatorkombination wird vorzugsweise eine der beiden Komponente zumindest teilweise vorgelegt, besonders bevorzugt wird die Reduktionsmittelkomponente zumindest teilweise vorgelegt.

Überraschend erwies sich neben der Auswahl der Emulgatorkomponente(n) nach Art und Menge sowie deren Verteilung auf Reaktorvorlage und Dosierung auch die Verteilung beider Monomerkomponenten Vinylacetat und Ethylen auf Reaktorvorlage und Dosierung von erheblichem Einfluss auf die Adhäsions-Kohäsions-Balance. Ohne uns an theoretische Aspekte der Vinylacetat-Ethylen-Copolymerisation in Emulsion zu binden, interpretieren wir dies letztlich als Einfluss einer sich im Verlaufe der Polymerisationsreaktion zeitlich ändernden Copolymerzusammensetzung, welche durch die Verteilung der Monomeren Vinylacetat und Ethylen auf Reaktorvorlage und Dosierungen gesteuert wird und die Adhäsions-Kohäsions-Balance des Polymerisats kontrolliert:

Für übliche, weit verbreitete, Emulsionspolymerisate von Vinylacetat und Ethylen hergestellt in Gegenwart von Schutzkolliod, insbesondere in Gegenwart von Polyvinylalkohol, und in Abwesenheit von Emulgator, ist bekannt, dass die Adhäsion zunimmt je Ethylen-ärmer das Copolymer für niedere Monomerumsatzwerte ist und umgekehrt. Nachteilig für die Adhäsion ist es für solche Polymerisate hingegen, je mehr der Ethylenanteil im Copolymer von höheren Werten für niedrige Umsatzwerte mit steigendem Monomerumsatz auf den Endwert abnimmt, der durch den Gesamtethylenanteil im Copolymeren bestimmt ist. Ersteres wird bekanntlich bei der Polymerisation in Abwesenheit von Emulgatoren erreicht, indem der Ethylenanteil im Reaktor vor Initiierung der Reaktion relativ niedrig ist, und der Vinylacetatanteil im Reaktor vor Initiierung im Reaktor relativ hoch ist.

Es war deshalb völlig überraschend zu finden, dass bei Polymerisation in Gegenwart erfindungsgemäß eingesetzter Emulgatoren die Adhäsion deutlich zunimmt - und nicht etwa abnimmt - je Ethylen-reicher das Copolymer für niedere Monomerumsatzwerte ist und umgekehrt. Besonders vorteilhaft für die angestrebte Adhäsions-Kohäsions-Balance ist es, wenn der Ethylenanteil im Copolymer relativ einheitlich über den Polymerisationsverlauf ist, oder wenn der Etylenanteil im Copolymer von einem höheren Wert für niedrige Umsätze mit steigendem Monomerumsatz auf einen Endwert abnimmt, der durch den Gesamtanteil des Ethylens, bezogen auf die Gesamtmenge der Monomere, bestimmt ist. Nachteilig für die Adhäsion ist es hingegen, je mehr der Ethylenanteil im Copolymer von geringen Werten für niedrige Umsatzwerte mit steigendem Monomerumsatz auf den Endwert zunimmt. Ersteres wird bei Polymerisation in Gegenwart erfindungsgemäß eingesetzter Emulgatoren erreicht, indem der Ethylenanteil im Reaktor vor Initiierung der Reaktion relativ hoch ist, und der Vinylacetatanteil im Reaktor vor Initiierung im Reaktor relativ niedrig ist. Wird jedoch beispielsweise der Anteil an Ethylenvorlage zu 100 Gew.-% und gleichzeitig der Anteil an Vinylacetatvorlage zu kleiner etwa 10 Gew.-% gewählt, so kann das nicht nur zu Problemen bezüglich unzulässig hoher Anfangsdruckwerte im Reaktor führen, sondern dann ist die geforderte Adhäsions-Kohäsion-Balance nicht mehr gewährleistet, weil die Kohäsion zu stark abfällt.

Wie die bisherige Erfindungsbeschreibung verdeutlicht, kann die Adhäsions-Kohäsions-Balance überraschend durch mehrere Parameter eingestellt werden. Dies sind im Wesentlichen der Ethylenanteil bezogen auf Gesamtmonomer, ETM; der Anteil an Vorlage-Ethylen bezogen auf Gesamt-Ethylen, ETV; der Anteil an Emulgator bezogen auf Gesamtmonomer, EA; der Anteil an Emulgator-Vorlage bezogen auf Gesamt-Emulgator, EV; und der Anteil an Vorlage-Vinylacetat bezogen auf Gesamt-Vinylacetat, VV; wobei die Art des Emulgators erfindungsgemäß definiert ist. Die Anteile sind dabei jeweils Gewichtsanteile.

Die geforderte Adhäsions-Kohäsions-Balance wird dadurch gewährleistet, dass die Kombination dieser Parameter innerhalb der vorgegebenen Grenzbereiche so gewählt wird, dass im Allgemeinen das folgende Verfahrenskriterium COP (criterion of process) erfüllt wird:

$$2,5 \leq COP \leq 70, \text{ wobei gilt}$$
$$COP = 100 \times (ETM^{2,5} \times ETV^{1,21} \times EA^{2,5} \times EV^{1,5} \times VV^{-1})$$

Dabei sind die Parameter wie folgt definiert:

$$ETM = MEt/MM; ETV = MEtV/MEt; EA = 100 \, ME/MM; EV = MEV/ME \text{ und } VV = MVacV/MVac.$$

Die einzelnen Größen bedeuten: MEt: Gesamtmasse Ethylen in kg; MM: Gesamtmasse Monomer in kg; MEtV: Masse Ethylen-Vorlage in kg; ME: Gesamtmasse Emulgator in kg; MEV: Masse Emulgator-Vorlage in kg; MVacV: Masse Vinylacetat-Vorlage in kg; und MVac: Gesamtmasse Vinylacetat in kg. Der Wert COP ist durch die angegebene Gleichung nur dann definiert, wenn alle Parameter innerhalb der angegebenen Grenzwerte liegen und die Emulgatorkomponente erfindungsgemäß ausgewählt ist.

Die geforderte Adhäsions-Kohäsions-Balance wird insbesondere dadurch gewährleistet, dass das Verfahrenskriterium vorteilhaft zu $3,0 \leq COP \leq 65$, vorzugsweise zu $3,0 \leq COP \leq 60$, besonders bevorzugt zu $3,5 \leq COP \leq 55$ gewählt wird.

Der untere und der obere Kriteriumswert, LL (lower limit) und UL (upper limit), kann in Abhängigkeit vom verwendeten Emulgator bzw. der Emulgatormischung und in Abhängigkeit von Art und Anteil an Schutzkolloid innerhalb der angegebenen Grenzen variieren. Die LL-Grenzwerte werden gerundet auf eine Kommastelle genau angegeben, die UL-Grenzwerte werden gerundet auf Ganze Zahlen genau angegeben. Bei Unterschreiten der LL-Grenzwerte sind die Anforderungen bezüglich Adhäsion in der Regel nicht zu gewährleisten. Bei Überschreiten der UL-Grenzwerte sind die Anforderungen an die Kohäsion in der Regel nicht zu gewährleisten.

Bei der Durchführung der Emulsionspolymerisation wird im Allgemeinen so vorgegangen, dass die genannten Bestandteile des Reaktionsgemisches (Monomere, Schutzkolloid, Emulgator) in den genannten Anteilen vorgelegt werden und der Ansatz anschließend auf Polymerisationstemperatur erwärmt wird. Vorteilhaft wird im größeren Maßstab die Reaktorvorlage vor Start der Initiierung auf eine Temperatur erwärmt, die zwischen 10°C und 40°C unterhalb der gewünschten Polymerisationstemperatur liegt, und die exotherme Reaktionswärme zum Aufheizen des Reaktors auf Reaktionstemperatur genutzt. Nach Erreichen der Polymerisationstemperatur wird der Initiator bzw. bei einer Redoxinitiatorkombination Oxidationsmittel und Reduktionsmittel zudosiert, und mit der gleichmäßigen Zudosierung der Restmengen an Monomer, Emulgator und gegebenenfalls Schutzkolloid nach exothermem Anspringen der Polymerisation begonnen.

Der pH-Wert während der Polymerisationsreaktion beträgt etwa 2 bis 7, vorzugsweise etwa 3 bis 6 und besonders bevorzugt etwa 3,5 bis 5,5. Dafür kann es erforderlich sein, den pH-Wert der Reaktorvorlage vor Start der Initiierung auf pH-Werte kleiner 6, vorzugsweise kleiner 5 und besonders bevorzugt im Bereich zwischen 3 und 4 einzustellen. Für die pH-Wert Einstellung eignen sich bekannte anorganische oder organische Säuren, von denen Phosphorsäure und Ameisensäure besonders bevorzugt werden. Es ist auch möglich, übliche Puffersubstanzen der Reaktorvorlage vor der Initiierung zuzuführen oder während der Reaktion zu dosieren, vorzugsweise kann auf solche Puffersubstanzen verzichtet werden.

In einer bevorzugten Ausführungsform wird so vorgegangen, dass 22 bis 32 Gew.-% an Ethylen, bezogen auf Gesamtmonomer Vinylacetat und Ethylen (in Abwesenheit weiterer Comonomere), 1,5 bis 3,5 Gew.-% bezogen auf Gesamtmonomer an Schutzkolloiden, insbesondere an teilverseiften Standard-Polyvinylalkohol(en) mit einem massemittleren Polymerisationsgrad von 600 bis 2000 und einem mittleren Hydrolysegrad von 86 bis 96 Mol-%, oder an vollverseiften Standard-Polyvinylalkoholen mit einem massemittleren Polymerisationsgrad von 600 bis 3500 und einem mittleren Hydrolysegrad von 96,1 bis 99,9 Mol-%, oder an modifizierten Polyvinylalkoholen, insbesondere von Ethylenmodifizierten Polyvinylalkoholen, mit einem massemittleren Polymerisationsgrad von 500 bis 4500 und einem mittleren Hydrolysegrad von 94,5 bis 99,9, oder Hydroxyethylcellulose mit Viskositäten, in 2 Gew.-%-iger wässriger Lösung von ≤ 1500 mPas, oder Mischungen der genannten Schutzkolloide, und 1 bis 2,5 Gew.-%, bezogen auf Gesamtmonomer, an nichtionischen ethoxylierten Emulgator (en) mit 4 bis 40 EO-Einheiten und einer linearen oder verzweigten Alkylkette mit zwischen 8 und 18 C-Atomen verwendet werden, und 15 bis 50 Gew.-% des Vinylacetatanteils, 50 bis 75 Gew.-% des Ethylenanteils, 100 Gew.-% des Schutzkolloidanteils, 50 bis 85 Gew.-% des Emulgatoranteils und ein Teil der Reduktionsmittelkomponente vor der Initiierung im Reaktor vorgelegt werden, die Reaktorvorlage auf einen pH-Wert zwischen 3 und 4 eingestellt und auf einen StartTemperatur von 10°C bis 40°C unterhalb der Reaktionstemperatur erwärmt wird. Die Reaktion kann anschließend durch parallele Dosierung von Oxidationsmittel Wasserstoffperoxid und Reduktionsmittel Na-Formaldehydsulfoxylat gestartet werden, und kurzzeitig nach exothermem Reaktionsstart mit gleichmäßiger paralleler Dosierung von Vinylacetat, Ethylen, wässriger Emulgatorlösung und fortdauernden Redox-Initiatordosierungen fortgesetzt werden. Dabei können die Ethylendosierung und die Emulgatordosierung mit der Vinylacetatdosierung enden, vorzugsweise werden die Ethylendosierung und die Emulgatordosierung vor Ende der Vinylacetatdosierung beendet. Insbesondere ist es vorteilhaft, die Emulgatordosierung bereits bei einem Anteil von 50 bis 75 Gew.-% des dosierten Vinylacetatanteils zu beenden. Nach Ende der Vinylacetatdosierung dauern, gegebenenfalls bei erhöhten Raten, die Redox-Initiatordosierungen fort bis die exotherme Reaktion abklingt und/oder der Gehalt an nicht umgesetztem Vinylacetat auf kleiner 2 Gew.-%, vorzugsweise auf kleiner 1 Gew.-%, bezogen auf die Gesamtmenge, an wässriger Dispersion abgenommen hat. Anschließend wird im Reaktor, beim Transfer des Reaktorinhalts in ein nachgeschaltetes Gefäß, oder in diesem nachgeschalteten Gefäß, der Anteil an nicht umgesetzten Monomer auf mindestens kleiner 0,1 Gew.-%, bezogen auf wässrige Dispersion, durch Nachpolymerisation, unter Hinzufügen von weiteren Redox-Initiatorkomponenten, und/oder durch bekanntes Dampfstrippen, reduziert.

Die mittlere Molmasse des Copolymeren aus Vinylacetat und Ethylen wird hier durch deren K-Wert bzw. die Grenzviskositätszahl [η] charakterisiert. Generelle Zusammenhänge zwischen Grenzviskositätszahl und einer mittleren Molmasse sind z.B. in H.-G. Elias, Polymere, Von Monomeren und Makromolekülen zu Werkstoffen, Hüthing & Wepf Verlag, 1996, S. 197 ff, beschrieben. Bekanntlich nimmt die Molmasse mit steigendem Ethylengehalt eines Vinylacetat-Ethylen-Copolymeren ab. Hier wurde nun gefunden, dass die Molmasse, charakterisiert durch K-Wert bzw. Grenzviskositätszahl, in überraschend erheblicher Weise, unter sonst konstanten Bedingungen, auch von Art und Menge des Emulgatoranteils und seiner Verteilung zwischen Reaktorvorlage und Dosierung, sowie auch von der Verteilung beider Monomere Vinylacetat und Ethylen zwischen Reaktorvorlage und Dosierung abhängt, sodass diese in den angegebenen Grenzen derart auswählbar sind, dass bei einem Anteil von Ethylen am Gesamtmonomer zwischen 18 und 34 Gew.-%, K-Werte von 75 ≤ K-Wert < 125 erzielt werden können, was dann dazu beiträgt, die geforderten deutlich verbesserten Adhäsionswerte auf schwierig zu verklebenden Substraten, insbesondere zu Polystyrol-Folien und Polyethylenterephthalat-Folien, bei ausreichender guter Kohäsion des Klebstofffilms, also die deutlich verbesserte Adhäsions-Kohäsions-Balance zu gewährleistet.

Bekanntlich können Emulgatoranteile in Polyvinylalkohol enthaltenden wässrigen Vinylacetat-Ethylen-Copolymerdispersionen die Adhäsion positiv beeinflussen, ohne dass damit eine Veränderung von K-Wert bzw. Grenzviskositätszahl einhergeht (vergleiche EP 1212383 B1). Mit dem erfindungsgemäßen Verfahren ist es nun gelungen, die Adhäsionswerte gemessen in Kraft/Längeneinheit, z.B. N/cm, bei definierter Abzugsgeschwindigkeit in Längeneinheit pro Zeit, z.B. in mm/min, bei hinreichend guter Kohäsion, ermittelt als Wärmestandfestigkeit in $N/mm^2$, auf mindestens zwei verschiedenen beliebigen Polymersubstraten, insbesondere Polystyrol und Polyethylenterephthalat, um jeweils mindestens 20 % und teils deutlich darüber hinaus zu erhöhen, verglichen mit Polymerisaten, die unter sonst gleichen Bedingungen, in Abwesenheit von Emulgatoren, polymerisiert wurden.

Gegenüber bisher bekannten wässrigen Vinylacetat-Ethylen-Copolymer-Dispersionen (VAE-Dispersionen) zeigen die mit dem erfindungsgemäßen Verfahren erhaltenen Produkte eine erheblich verbesserte Adhäsion bei der Verklebung von Kunststofffolien mit cellulosischen Substraten wie Papier, Pappe, Baumwollgewebe. Gegenüber bisher bekannten Klebemitteln auf Basis von VAE-Dispersionen bleibt dabei die Balance zwischen Adhäsion und Kohäsion erhalten.

Es ist damit gelungen, wässrige VAE-Dispersionen bereit zu stellen, die einen Kohäsionswert, gemessen als Wärmestandfestigkeit von mindestens 0,2 $N/mm^2$, im Besonderen von mindestens 0,3 $N/mm^2$ aufweisen und gleichzeitig hohe Adhäsionswerte bei schwierig zu verklebenden Substraten zeigen:

Eine Adhäsion von > 3,5 N/cm Schälfestigkeit für Polyethelenterephthalat-Folie Hostaphan® RN125 verklebt mit Baumwolle bei einer Abzugsgeschwindigkeit von 10 mm/min;
eine Adhäsion von wenigstens 2,0 N/cm bei einer Abzugsgeschwindigkeit von 900 mm/min;
eine Adhäsion von wenigstens 4,2 N/cm für Polystyrol-Folie Sidaplax® Polyflex 90 verklebt mit Baumwolle bei einer Abzugsgeschwindigkeit von 5 mm/min.

Darüber hinaus zeigen die wässrigen VAE-Dispersionen eine hohe Abbindegeschwindigkeit des Klebefilms, welche gemessen als Anzugsgeschwindigkeit (AZG) Werte von wenigstens 2 Sekunden, vorzugsweise von wenigstens 1,5 Sekunden erreicht.

Die mit dem erfindungsgemäßen Verfahren erhältlichen wässrigen Dispersionen haben einen Feststoffgehalt von im Allgemeinen ≥ 56 %, vorzugsweise ≥ 58 %. Die Viskosität der wässrigen Dispersionen beträgt im Allgemeinen zwischen 1000 und 10000 mPas, gemessen als Brookfield-Viskosität Bf20, bei Feststoffgehalten im Bereich von 56 % bis 62 %. Es werden feinteilige Dispersionen mit einem sehr geringen Anteil an groben Partikel erhalten: Der Siebrückstand > 40 $\mu$m ist kleiner 500 ppm.

Die mit dem erfindungsgemäßen Verfahren erhaltenen VAE-Dispersionen eignen sich zur Verwendung als oder in Klebemittel für die Verklebung unterschiedlicher Substrate, vorzugsweise von Papier, Pappe, Holz, Fasermaterialien und Kunststoffen wie Polymerfolien, beispielsweise Polyethylen-, Polyvinylchlorid, Polyamid, Polyester-, Polystyrol-Folien oder Acrylnitril-Butadien-Styrol-Substraten. Verwendung finden die VAE-Dispersionen insbesondere als Papierklebemittel, Verpackungsklebstoffe, Holzklebstoffe und Klebemittel für gewebte und nichtgewebte Fasermaterialien. Besonders geeignet sind die VAE-Dispersionen für die Verklebung von cellulosischen Substraten, insbesondere Papier, Pappe oder Baumwollgewebe, jeweils mit Kunststoffen, insbesondere mit Kunststofffolien oder für die Verklebung von Kunststoffen miteinander, beispielsweise für Folie/Folie-Verklebungen.

Die nachfolgenden Beispiele dienen der Erläuterung der Erfindung ohne diese auf die angeführten Beispiele zu beschränken.

Zunächst werden die Testmethoden für charakteristische Dispersionskennwerte und die Testmethoden zur Bestimmung der Klebstoffeigenschaften beschrieben:

Testmethoden für charakteristische Dispersionskennwerte:

Festgehalt / Trocknungsrückstand (FG)

Zur Bestimmung des Festgehaltes, in Prozent bezogen auf Dispersion, wurden etwa 0,3 g Polymerdispersion eingewogen und als dünner Film für 30 Minuten bei 150°C im Umlufttrockenschrank getrocknet. Der Trocknungsrückstand wurde, nach Abkühlen im Excikkator über Silikagel, zurückgewogen und der Festgehalt in Gew.-%, bezogen auf Dispersion, aus Rückstand und Einwaage berechnet.

Viskosität (Bf20)

Die Viskosität der Dispersion wurde nach Temperierung auf 23°C mit einem Brookfieldviskosimeter, unter Verwendung von Spindel 5 bei 20 UPM, vermessen. Die Viskosität wird in mPas angegeben. Zur besseren Vergleichbarkeit wurden die beim experimentellen Festgehalt, $FG_{EX}$, gemessenen Viskositätswerte, $BF20_{EX}$, auf einen Festgehalt von 60 % umgerechnet; mit befriedigender Näherung gilt für die hier untersuchten Polymerdispersionen: Bf20 (60 %) = $Bf20_{EX} * EXP(0.5 * (60 - FG_{EX}))$.

Teilchengrößen ($x_{3,50}$)

Zur Ermittlung einer Teilchengrößenverteilung mit dem Messgerät Beckmann Coulter® LS 13 320 nach Gerätevorschrift, unter Verwendung der optischen Konstanten für Polyvinylacetat, wurde die Dispersion mit Wasser verdünnt. Als Teilchengröße wird hier der Zentralwert der Volumenverteilungsfunktion des Partikeldurchmessers $x_{3,50}$ in Nanometern angegeben. Die ermittelten Teilchengrößenverteilungen weisen im Wesentlichen monomodale Verteilungsdichten auf, deren Modalwert nahe dem Zentralwert der Verteilung liegt.

Siebrückstand (grit)

Der Rückstand der Dispersion angegeben in Teilen pro $10^6$, bezogen auf Dispersion (ppm), charakterisiert grobkörnige Anteile in der Dispersion mit Abmessungen größer 40 $\mu$m. Zur Bestimmung solcher unerwünschter und minimal zu haltender Anteile wurden 100 Gramm der Dispersion mit bis zu einem Liter destilliertem Wasser verdünnt, anschließend durch ein Nylon-Siebgewebe mit 150 $\mu$m Maschenweite gegossen, und der Durchgang durch ein Siebgewebe der Maschenweite von 40 $\mu$m filtriert. Es wurde jeweils mit Wasser solange gespült bis der Durchgang klar war. Der Rückstand auf den Siebgeweben wurde nach Trocknung zurückgewogen und der Siebrückstand pro Siebgewebe, bezogen auf Dispersion, berechnet. In Tabelle 3 wurde der Gesamtrückstand auf beiden Sieben größer 40 $\mu$m angegeben.

Es sei ausdrücklich erwähnt, dass die Angabe von Rückstand > 40 $\mu$m eine sehr kritische Bewertung des Siebrückstandes ist. Industriell üblich sind Angaben > 50 $\mu$m bzw. > 60 $\mu$m. Erfahrungsgemäß können im Bereich zwischen 40 $\mu$m und 60 $\mu$m etwa 20 % bis 50 % des Rückstandes zwischen 40 $\mu$m und 150 pm liegen.

K-Wert und Grenzviskositätszahl

Aus der Dispersion wurde durch Einwaage in einen 50 ml Maßkolben eine Dispersionsprobe hergestellt, die 0,5 g Polymerisat (ohne polyvinylalkohol) und 4 g Wasser enthielt. Unter Rühren wurde langsam Tetrahydrofuran (THF) zugetropft, bis eine klare Lösung entstand. Nach Temperieren auf 23°C wurde mit THF bis zur Eichmarke aufgefüllt. Die Messlösung hatte eine Konzentration von 1 g Polymerisat pro 100 ml Lösung. Unter Berücksichtigung der Hagenbachkorrektur wurde die Viskosität einer gelfreien Probe der Messlösung und der polymerisatfreien Vergleichslösung im Ubbelohdeviskosimeter (Kapillare 1c) bei 23 °C bestimmt und damit die relative Lösungsviskosität $\eta_{rel}$ ermittelt. Mit dieser wurde die "Eigenviskosität k" nach Fikentscher, Cellulosechemie 13(1932)58, und der "K-Wert" zu K = 1000 k berechnet. Für die Eigenviskosität k gilt:

$$k = \frac{1}{2}\left(\frac{1.5\,c_V\,\log\eta_{rel} - c_V}{1.5\,c_V{}^2 + 75\,c_V}\right) + \left[\left(\frac{1}{2}\left(\frac{1.5\,c_V\,\log\eta_{rel} - c_V}{1.5\,c_V{}^2 + 75\,c_V}\right)\right)^2 + \frac{\log\eta_{rel}}{1.5\,c_V{}^2 + 75\,c_V}\right]^{\frac{1}{2}},$$

wobei die Konzentration $c_V$ in g/dl einzusetzen ist.

Der K-Wert ist eine gebräuchliche und nützliche Maßzahl, die mit der viskosimetrischen mittleren Molmasse des Polymerisats korreliert.

Der K-Wert ist naturgemäß von der Copolymerzusammensetzung abhängig und nimmt mit ansteigendem Ethylengehalt eines Vinylacetat-Ethylen-Mischpolymerisats ab.

Aus dem so ermittelten K-Wert kann mit der angegebenen Gleichung die Konzentrationsabhängigkeit der relativen Viskosität berechnet werden. Daraus folgt durch Rechnung die Abhängigkeit des Quotienten, ($\eta_s$ / $c_v$), aus spezifischer Viskosität, $\eta_s = (\eta_{rel} - 1)$, und Konzentration, $c_v$, von der Konzentration. Extrapolation - zweckmäßig mittels Exponentialfunktion - auf unendliche Verdünnung liefert die Grenzviskositätszahl [$\eta$]. Die Konzentration wird hierbei in Gramm pro 100 ml Lösung, also in g/dl angesetzt, d.h. [$\eta$] ergibt sich hier in dl/g.

Die Ergebnisse für K-Wert und Grenzviskositätszahl [$\eta$] werden in Tabelle 3 angegeben.

Testmethoden zur Bestimmung der Klebstoffeigenschaften:

Abbindegeschwindigkeit (AZG-Methode)

Während des Abbindens einer als Klebstoff geeigneten Dispersion steigt die Festigkeit der Verklebung mit der Zeit an. Die Geschwindigkeit des Abbindevorgangs kann deshalb durch Änderung der Festigkeit eines Klebefilms in Abhängigkeit von der Zeit beschrieben werden. Mit der Methode der Anzugsgeschwindigkeit (AZG) wird nun diejenige Zeit ermittelt, bei der eine Verklebungsfläche von 1 cm$^2$ einer beschleunigungsfreien senkrechten Zugkraft von 2 Newton standhält.

Für die Verklebung wurde ein Standardkarton mit einem 50 $\mu$m Dispersionsfilm beaufschlagt und mit einem 1 cm$^2$ großen kreisförmigen Stück gleichen Kartons verklebt. Nach verschiedenen Zeiten wurde die Beständigkeit der Verklebung gegen die senkrechte Zugkraft von 2 N geprüft und so diejenige Zeit in Sekunden ermittelt, während der die Verbindung bestehen bleibt. Das Ergebnis wird als AZG in Sekunden angegeben. Abfallende AZG-Werte verschiedener Dispersionen charakterisieren demnach ansteigende Abbindegeschwindigkeiten.

Kohäsion

Aus 12 Sperrholzstäbchen (135 x 30 x 4 mm) wurden 6 Prüfkörper mit einer verklebten Fläche von jeweils 9 cm$^2$ hergestellt. Dazu wurden je zwei Stäbchen mit jeweils einer Dispersionsschicht von 100 $\mu$m auf einer Länge von 30 mm beaufschlagt und ohne Druck für 1 Minute verbunden. Anschließend wurde die Verklebung für 30 Minuten mit einem Pressdruck von 0.2 N/mm$^2$ beaufschlagt. Die Prüfkörper wurden dann bei 23°C und 50 % Luftfeuchtigkeit für 7 Tage gelagert und vor der Prüfung 4 Stunden bei 70°C im Umlufttrockenschrank temperiert. Danach wurde die Festigkeit der Verklebung sofort im warmen Zustand mit einer Zugprüfmaschine mit einer Abzugsgeschwindigkeit von 50 mm/min bis zum Bruch der Verklebung ermittelt. Die Maximalkraft beim Bruch, bezogen auf die Verklebungsfläche, wird als Klebefestigkeit (Kohäsion) in N/mm$^2$ angegeben. Als Ergebnis für die Kohäsion wird der Mittelwert der Ausprüfungen aller 12 Prüflinge gerundet auf eine Kommastelle genau angegeben. Es sind Kohäsionswerte von mindestens 0,2 N/mm$^2$, vorzugsweise von wenigstens 0,3 N/mm$^2$ gefordert.

Haftungssumme

Papierstreifen (10 x 50 mm) wurden mit jeweils 50 $\mu$m Schichtdicke der zu prüfenden Dispersion bestrichen und auf 7 verschiedene Kunststofffolien geklebt. Nach 2 Stunden Trockenzeit wurden die Teststreifen von Hand abgezogen und die Haftfestigkeit (Adhäsion) wie folgt beurteilt:

1: sehr gute Haftung, 100 % Papierausriss
2: gute Haftung, überwiegend Papierausriss
3: Haftung, Trennung mit Widerstand
4: keine Haftung, Abplatzen

Durch Addition der 7 Beurteilungswerte wurde die Haftungssumme erhalten, die also zwischen 7 (sehr gute Haftung auf allen 7 Substraten) und 28 (keine Haftung auf allen Substraten) variieren kann. Die Haftungssumme soll $\leq$ 18, vorzugsweise $\leq$ 16 sein.

Adhäsion (Schälfestigkeit)

Für eine quantitative Ermittlung der Adhäsion wurde als Polystyrol-Substrat eine Sidaplax® Polyflex 90 Folie und als Polyethylenterephthalat-Substrat eine Hostaphan® RN125 Folie verwendet.

Es wurde ein Klebeverbund mit einem Standard Baumwollgewebe, charakterisiert nach DIN53939 mit dem WFK Code 10A, hergestellt.

Dafür wurden sowohl das Baumwollgewebe als auch die Folie mittels eines 100 $\mu$m Drahtrakels mit der wässrigen Dispersion beschichtet. Die beiden beschichteten Substrate wurden dann manuell laminiert und mit Hilfe einer gummibeschichteten Metallrolle (3,5 kg) verpresst. Nach der Verklebung wurden die Prüflinge jeweils 24 h bei Normklima (23°C und 50 % rel. Luftfeuchtigkeit) getrocknet.

Für die Herstellung des Klebeverbundes zwischen Polyethylenterephthalat und Baumwolle wurden jeweils DIN A4 große Flächen des Baumwollgewebes mit Hostaphan® Folie verklebt (auf einer Querseite blieben 5 cm unverklebt), aus denen dann nach der Trocknung längs 2,5 cm breite Streifen mit einer Schneidemaschine als Prüflinge geschnitten wurden.

Für die Herstellung des Klebeverbundes zwischen Polystyrol und Baumwolle wurden bereits zugeschnittene 2,5 cm breite Streifen des Baumwollgewebes mit 4,8 cm breiten Streifen der Sidaplax® Folie mittig auf einer Länge von 15 cm verklebt (5 cm bleiben unverklebt).

Zur Prüfung der Adhäsion (Schälfestigkeit) wurde das Baumwollgewebe von der Folie in einem Zugprüfgerät delaminiert. Dazu wurden die unverklebten Abschnitte der Streifen eingespannt und das Baumwollgewebe bei einem Abzugswinkel von ca. 180 Grad von der Polymerfolie abgeschält. Die Schälversuche wurden am Tag nach erfolgter Trocknung des Klebverbundes durchgeführt. Zur Ermittlung der Haftung auf Polystyrol wurde eine Abzugsgeschwindigkeit von 5 mm/min gewählt. Bei einem Messweg von 60 mm wurde die Delaminationskraft (Weiterreissfestigkeit) zwischen 20 und 60 mm gemessen und gemittelt.

Zur Ermittlung der Adhäsion auf Polyethylenterephthalat wurden zwei verschiedene Messgeschwindigkeiten gewählt: eine hohe Abzugsgeschwindigkeit mit 900 mm/min und eine geringe Abzugsgeschwindigkeit von 10 mm/min. Für die geringe Abzugsgeschwindigkeit wurde ein 60 mm Messweg eingestellt, wobei die Weiterreissfestigkeit zwischen 20 und 60 mm gemessen und gemittelt wurde. Bei der höheren Messgeschwindigkeit von 900 mm/min wurde ein Messweg von 150 mm eingestellt, wobei die Weiterreissfestigkeit zwischen 20 und 150 mm gemessen und gemittelt wurde. Je Substrat und Abzugsgeschwindigkeit wurden jeweils 8 Verklebungen delaminiert.

Die hohe Abzugsgeschwindigkeit für PET-Folie von 900 mm/min wurde zusätzlich gewählt, da sich bei hoher Abzugsgeschwindigkeit Schwächen bezüglich Adhäsion besonders deutlich zeigen.

Die Adhäsion (Schälfestigkeit) ergibt sich aus den gemittelten Weiterreissfestigkeiten für alle Streifen und der Streifenbreite von jeweils 2,5 cm und wird in N/cm gerundet auf eine Kommastelle genau angegeben.

Beispiele:

Vergleichsbeispiele 1 und 2:

Für die Vergleichsbeispielen 1 bis 2 wurden zwei kommerziell erhältliche Vinylacetat-Ethylen-Copolymer-Dispersionen getestet, die wegen ihrer guten Adhäsionseigenschaften allgemein bekannt sind. Die Ergebnisse sind in Tabelle 4 angegeben.

Vergleichsbeispiel 1:

Mowilith® DM132 ist eine mit Polyvinylalkohol stabilisierte Vinylacetat-Ethylen-Copolymer-Dispersion der Celanese Corp..

Vergleichsbeispiel 2:

Vinnapas® A920 ist eine mit Polyvinylalkohol und APEO-Emulgator stabilisierte Vinylacetat-Ethylen-Copolymer-Dispersion der Wacker Chemie AG.

Beispiele 3 bis 61:

Die Beispiele 3 und 4 sind Vergleichsbeispiele, die ohne Einsatz von Emulgatoren polymerisiert wurden.
Die in den Beispielen 5 bis 61 eingesetzten Emulgatoren sind in Tabelle 1 bezüglich Handelsname und chemischer Zusammensetzung spezifiziert.
Zur Herstellung der Polymerdispersionen wurde nachfolgende allgemeine Polymerisationsvorschrift verwendet. In Tabelle 2 sind die Detailangaben zu den Variationen dieses Verfahrens bei dem einzelnen Beispielen enthalten. In Tabelle 2 werden auch die Werte für das Verfahrenskriterium COP (criterion of process) für alle erfindungsgemäßen Beispiele angegeben. Für die Vergleichsbeispiele ist COP nicht definiert, weil diese entweder keinen Emulgator enthalten, oder die Emulgatorauswahl nicht erfindungsgemäß ist, oder mindestens ein Verfahrensparameter außerhalb des erfindungsgemäßen Sollbereiches liegt.

Allgemeine Polymerisationsvorschrift für Beispiel 3 bis 61:

Die Polymerisation wurde in einem 2-Liter-Druckreaktor durchgeführt, welcher mit einem dreistufigen Paddelrührer, einer Mantelheizung bzw. Mantelkühlung, angeschlossen an einen regelbaren Thermostaten, und Dosierstutzen für folgende Dosierungen ausgestattet war: Dosierung 1 war eine wässrige Lösung des Oxidationsmittels des Redox-Initiatorssytems, Dosierung 2 war die wässrige Lösung des Reduktionsmittels des Redox-Initiatorsystems, Dosierung 3 war das Vinylacetat-Monomer, Dosierung 4 war die wässrige Lösung des Emulgators (für die emulgatorfreien Vergleichsbeispiele nur Wasser) und Dosierung 5 war das Ethylen-Monomer.
Für den Ablauf der Polymerisation wurden folgende Verfahrensschritte eingehalten:

Bereitung Reaktorvorlage:

Zunächst wurde die wässrige Vorlage bereitet, bestehend aus

- Vorlage-Wasser,
- wässriger Schutzkolloid-Lösung, die nach allgemein bekannten Verfahren gesondert hergestellt wurde,
- Emulgatoren (soweit in die Vorlage eingebracht),
- 5 Gew.-% des in Dosierung 2 verwendeten Reduktionsmittels (soweit nicht anders angegeben),

Der pH-Wert der wässrigen Vorlage wurde kontrolliert und in der Regel durch Zugabe von Phosphorsäure oder Ameisensäure auf pH 3,5 eingestellt (Rezeptmenge 10 g).
Danach wurden 0,4 Gew.-% einer 1 Gew.-%-igen Eisenammonsulfatlösung, bezogen auf die gesamte Monomermenge, zur Vorlage hinzugefügt, und diese wässrige Vorlage in den evakuierten Reaktor eingesaugt, gefolgt von 30 g Wasser zur Leitungsspülung. Anschließend wurde unter Rühren das Vinylacetat der Vorlage in den Reaktor eingesaugt, gefolgt von 40 g Wasser zur Leitungsspülung.
Anschließend wurde der Reaktor auf Solltemperatur aufgeheizt und gleichzeitig das Vakuum mit Ethylen gebrochen und bei Soll-Rührerdrehzahl die Vorlagemenge an Ethylen aufgedrückt.

Start der Reaktion und Dosierphase:

Bei Temperatur- und Druckgleichgewicht wurde die parallele Dosierung der beiden Initiatorkomponenten mit den Dosierungen 1 und 2 begonnen.
5 Minuten nach Anspringen der Reaktion, erkennbar durch Erhöhung der Innentemperatur bzw. Abfall der Manteltemperatur, wurden die beiden Dosierungen 3 und 4 gestartet und in der Regel mit konstanter Rate über einen Zeitraum von 120 bis 180 Minuten dosiert. Dosierung 4, mit einer Gesamtmenge von 80 g, nur für die emulgatorfreien Vergleichspolymerisationen mit einer Menge von 100 g, wurde spätestens gleichzeitig mit Dosierung 3 beendet.

15 Minuten nach Beginn der Dosierungen 3 und 4 wurde die Dosierung 5 gestartet, die etwa 15 Minuten vor Ende von Dosierung 3 beendet wurde. Die erforderliche Menge Ethylen wurde dabei in äquidistanten Zeitintervallen mit äquidistanten Mengen aufgedrückt, in der Regel im Zeitabstand von 10 min. Natürlich kann Dosierung 5 auch mit einer konstanten Masseflussrate dosiert werden.

Auspolymerisation:

Nach Ende der Dosierung 3 wurden die bis dahin, in der Regel, konstanten Raten der Dosierungen 1 und 2 erhöht und noch mindestens 90 Minuten dosiert. Die Gesamtmengen an Dosierungen 1 und 2 nach Rezept betrugen jeweils 100 g, für die emulgatorfreien Vergleichspolymerisationen jeweils 65 g. In Fällen in denen nach Ablauf der vorgesehenen Zeit noch erkennbare Reaktion vorhanden war, wurden beide Dosierungen 1 und 2 weiter solange mit jeweils konstanten Raten dosiert, bis keine Reaktion mehr erkennbar war.

Vor allem infolge längerer Dosierzeit und damit höherer Dosiermenge für die Dosierungen 1 und 2 kann der Endfestgehalt der Dispersion kleiner als der rezeptierte Festgehalt sein; zudem können Abweichungen zwischen den Richtwertmengen und den Istmengen für pH-Einstellungen zu geringen Abweichungen zwischen experimentellem Endfestgehalt und Rezept-Festgehalt führen.

Nachpolymerisation:

Nach Ende der Dosierungen 1 und 2 wurden zur Nachpolymerisation jeweils 10 Gew.-%-ige Lösungen von Na-Formaldehydsulfoxylat (Dosierung 6) und t-Butylhydroperoxid (Dosierung 7), abwechselnd und insgesamt je 4 g, mit Wasserspülungen von insgesamt 20 g, in den Reaktor dosiert.

Abkühlen / Entspannen / Einstellen:

Nach Ende der Nachpolymerisation wurde das Produkt auf ca. 30 °C abgekühlt und der Reaktorinhalt entspannt. Unter Zusatz von 10 Gew.-%-iger Natronlauge (Rezeptmenge 5 g) wurde der pH-Wert auf ca. 5,5 eingestellt.

Weitere Angaben:

In der Regel wurde als Dosierung 1 mit einer 2 Gew.-%-igen Wasserstoffperoxidlösung und als Dosierung 2 (wenn nicht anders angegeben) mit einer 9 Gew.-%-igen Na-Formaldehydsulfoxylat-Lösung (Brüggolit®) gearbeitet.

Die Menge an Vorlage-Wasser ergab sich aus der Konzentration der eingesetzten Schutzkolloidlösung-Lösung, dem rezeptierten Festgehalt, und dem Füllgrad des Reaktors bei Reaktionsende, der in der Regel zwischen 90 und 95 Vol.-% festgelegt war. Damit sind auch die jeweiligen Gesamtmengen an eingesetzten Monomeren definiert.

Als Wasser, auch zur Bereitung der Lösungen für Dosierungen 1, 2, 4, 6 und 7, wurde ausschließlich vollentsalztes Wofatitwasser verwendet.

Für Dosierung 4 kamen verschiedene Emulgatoren zum Einsatz, die insgesamt in Tabelle 1 aufgeführt werden.

Als Schutzkolloide wurden Polyvinylalkohole oder Hydroxyethylcelluluse verwendet. Als Polyvinylalkokol wurde, wenn nicht anders angegeben, ein niedermolekularer Standard-Polyvinylalkohol A mit einem massemittleren Polymerisationsgrad von 850 und einem mittleren Hydrolysegrad von 88 Mol-% verwendet. Als weitere Polyvinylalkohole wurden ein Standard-Polyvinylalkohol B mit einem massemittleren Polymerisationsgrad von 1450 und einem mittleren Hydrolysegrad von 88 Mol-% und ein Standard-Polyvinylalkohol C mit einem massemittleren Polymerisationsgrad von 3000 und einem mittleren Hydrolysegrad von 88 Mol-% eingesetzt. Als modifizierter Polyvinylalkohol D kam ein ethylenmodifizierter Polyvinylalkohol mit einem Ethylenanteil von 3,2 Mol.-%, einem massemittleren Polymerisationsgrad von 3400 und einem mittleren Hydrolysegrad von 98,1 Mol.-% zum Einsatz; Ethylenanteil und Hydrolysegrad wurden durch NMR-Messungen bestimmt, der Polymerisationsgrad korreliert mit der Viskosität einer 4 Gew.-%-igen Lösung dieses modifizierten Polyvinylalkohols. Als Hydroxyethylcellulose wurde Natrosol® 250 GR der Firma Herkules verwendet.

Tabelle 2 fasst die Rezepturdaten zusammen.

Die Polymerisationen wurde bei Temperaturen zwischen 50°C und 70°C Reaktionstemperatur durchgeführt, dabei wurde das Reaktionsgemisch gerührt, so dass Homogenität des Reaktionsgemisches und Wärmeabfuhr gewährleistet wurde. Dafür waren im 2 Liter Reaktor Drehzahlen zwischen 300 und 600 UPM ausreichend. Die Soll-Drehzahl wurde während der Reaktion nicht verändert. Die Soll-Temperatur zu Beginn der Dosierungen 1 und 2 kann bis auf 30°C bis 40°C abgesenkt und die Reaktionswärme zum weiteren Aufheizen des Reaktionsgemische benutzt werden. Es zeigt sich, dass das Temperaturprofil der Polymerisation im angegebenen Bereich für die Klebstoffeigenschaften der Produkte nicht von entscheidendem Einfluss ist.

Exemplarisch wird das Rezept für Beispiel 3 (emulgatorfreies Vergleichsbeispiel) angegeben:

Reaktorvorlage:

292 g Wasser,
137,5 g Polyvinylalkohol-Lösung (20 Gew.-%-ig) des Polyvinylalkohols A,
6 g Brüggolit (9 Gew.-%-ige Lösung),
10 g Phosphorsäure (10 Gew.-%-ige Lösung), Richtwert für pH-Einstellung pH = 3,5,
4.5 g Eisenammonsulfat (1 Gew.-%-ige Lösung),
30 g Wasser-Spülung,
400 g Vinylacetat,
40 g Wasser-Spülung,
150 g Ethylen,
Aufheizen auf Solltemperatur von 60°C.

Dosierung 1:

65 g Wasserstoffperoxid (2 Gew.-%-ige, wässrige Lösung)

Dosierung 2:

65 g Brüggolit (9 Gew.-%-ige, wässrige Lösung)

Dosierung 3:

400 g Vinylacetat (dosiert mit konstanter Rate über 2 Stunden)

Dosierung 4:

100 g Wasser (dosiert mit konstanter Rate über 2 Stunden)

Dosierung 5:

150 g Ethylen (aufgedrückt in ca. 90 Minuten)

Dosierung 6:

4 g Brüggolit® (10 Gew.-%-ige, wässrige Lösung) 10 g Wasser-Spülung

Dosierung 7:

4 g t-Butylhydroperoxid (10 Gew.-%-ige, wässrige Lösung) 10 g Wasserspülung

Einstellung:

5 g Natronlauge (10 Gew.-%-ige, wässrige Lösung)

Es resultierten nach Rezept bei vollständigem Monomerumsatz 1883 g, entsprechend 1783 ml Polymerdispersion mit einem Rezept-Festgehalt von 60,4 Gew.-% bei einem Reaktorendfüllgrad von ca. 91 Vol.-%.

Für die Beispiele 4 bis 61 wurde entsprechend, unter Beachtung der Angaben zum Polymerisationsverfahren und der Angaben in Tabelle 2, verfahren.

Die Beispiele 3, 4 und 37 und 57 sind Vergleichsbeispiele für Polymerisationen in Abwesenheit von Emulgator, wobei der Anteil an vorgelegtem Vinylacetat-Monomer, der Anteil an Polyvinylalkohol und für Beispiel 37 der Polymerisationsgrad des Polyvinylalkohol, durch Verwendung des Polyvinylalkohols B, variiert wurden.

Für Beispiel 31 wurde bei Beibehaltung der Menge an Reduktionsmittel-Vorlage die Konzentration der Dosierung 2 auf ein Viertel reduziert.

Für Beispiel 38 wurde Polyvinylalkohol B und für Beispiel 39 ein 3:1 Blend aus Polyvinylalkohol A und Polyvinylalkohol C und für Beispiel 40 Polyvinylalkohol D verwendet. Für Beispiel 41 wurde Hydroxyethylcellulose als Schutzkolloid verwendet. Für die Vergleichsbeispiele 59, 60 und 61 wurde zusätzlich Kettenregler (chain transfer agent) zugefügt: Es wurden 0,50 Gew.-% Mercaptopropionsäure (MPS) bezogen auf Gesamtmonomer, eingesetzt. Für die Vergleichsbeispiele 59 und 60 wurde MPS der organischen Dosierung 3 und für Vergleichsbeispiel 61 der wässrigen Dosierung 4 zugefügt. Für Vergleichsbeispiel 60 wurden des weiteren 1,2 Gew.-% Acrylamid und 0,13 Gew.-% Allylmethacrylat, jeweils bezogen auf Gesamtmonomer, der Dosierung 4 zugefügt. Für Vergleichsbeispiel 61 wurden 0,6 Gew.-% Acrylamid und 0,13 Gew.-% Allyllmethacrylat, jeweils bezogen auf Gesamtmonomer, der Dosierung 3 zugefügt.

Die so erhaltenen Polymerdispersionen der Beispiele 3 bis 61 wurden bezüglich charakteristischer Dispersionskennwerte analysiert. Die Ergebnisse dieser Analysen werden in der Tabelle 3 angegeben.

Die Polymerdispersionen der Beispiele 1 bis 61 wurden ebenfalls bezüglich ihrer Klebstoffeigenschaften untersucht. Die dabei erhaltenen Ergebnisse sind in der Tabelle 4 zusammengestellt.

Für Vergleichsbeispiel 58 (ein emulgatorfreies Polymerisat mit 3,5 Gew.-% Polyvinylalkohol A bezogen auf Gesamtmonomer) wurden dem Endprodukt 2 Gew.-% Emulgator, bezogen auf Polymer, zugesetzt und die Klebstoffeigenschaften geprüft (Vergleichsbeispiel 58-A).

Diskussion der Klebstoffeigenschaften der gemäß der Beispiele gefertigten Dispersionen anhand der in Tabelle 4 zusammengefassten Ergebnisse:

Vergleichsbeispiele 1 und 2

Das Produkt nach Vergleichsbeispiel 1 ergab eine gute Kohäsion und eine ausgezeichnete Adhäsion auf Polystyrol, jedoch sind die Adhäsionswerte auf Polyester, insbesondere bei schnellem Abschälen deutlich zu gering.

Das Produkt nach Vergleichsbeispiel 2 ergab sehr gute Adhäsionswerte insbesondere auf Polyester, jedoch ist die Kohäsion viel zu gering.

Vergleichsbeispiele 3, 4, 37 und 58 (ohne Emulgator)

Alle emulgatorfrei hergestellten Produkte führten zu ausgezeichneten Kohäsionswerten, wie sie für Vinylacetat-Ethylen-Mischpolymerisate, stabilisiert ausschließlich in Gegenwart von Polyvinylalkohol, aus dem Stand der Technik bekannt sind. Unter identischen Bedingungen hergestellte Polymerisate (Vergleichsbeispiele 3 und 58) zeigten geringere - insgesamt unzureichende - Adhäsionswerte mit erhöhtem Anteil an Polyvinylalkohol.

Ein Einfluss der Verteilung von Vinylacetat-Monomer (VAC) zwischen Vorlage und Dosierung zeigte sich hier derart, dass mit 25 Gew.-% VAC-Vorlage geringere Adhäsionswerte erhalten wurden als mit 50 Gew.-% VAC-Vorlage; auch der K-Wert ist für 25 Gew.-% VAC-Vorlage erhöht (Vergleichsbeispiel 4 im Vergleich zu Vergleichsbeispiel 3). Wie im Folgenden noch zu diskutierende Ergebnisse erfindungsgemäßer Beispiele zeigen, gestaltete sich bei Polymerisation in Gegenwart von erfindungsgemäß eingesetztem Emulgator dieser Befund völlig überraschend entgegengesetzt.

Die Vergleichsbeispiele 3 und 4 lieferten die Basisadhäsionswerte für folgende erfindungsgemäße Beispiele.

Beispiele 5, 6 und 7

Für diese Beispiele wurden EO-PO-Addukte als Emulgatoren eingesetzt. Während mit einem EO-Anteil von etwa 20 Gew.-% die Adhäsionswerte deutlich verbessert werden, ist die Verbesserung bei Anwendung eines EO-PO-Adduktes mit etwa 40 % EO-Anteil geringer. Die Verringerung der VAC-Vorlage von 50 Gew.-% (Beispiel 5) auf 25 Gew.-% (Beispiel 6) führte überraschend zu einem deutlichen Anstieg der Adhäsionswerte bei nahezu unveränderter Kohäsion.

Beispiele 8 bis 20

Für diese Beispiele wurden nichtionische, ethoxylierte Isotridecyl-Fettalkohole mit unterschiedlicher EO-Kettenlänge als Emulgatoren eingesetzt. Variiert wurden der Anteil an Ethylen bezogen auf Gesamtmonomer, der Ethylen-Anteil in der Vorlage, der VAC-Anteil in der Vorlage, der Anteil von Emulgator bezogen auf Gesamtmonomer, und der Anteil an Emulgator in der Vorlage.

Beispiel 9 demonstriert im Vergleich zu Beispiel 8, dass in Gegenwart von erfindungsgemäß eingesetztem Emulgator die Adhäsionswerte mit abnehmendem Anteil an VAC-Vorlage (im Vergleich zu den emulgatorfreien Vergleichansätzen 3 und 4) überraschend und deutlich zunehmen, gleichzeitig nimmt der K-Wert ab.

Vergleichsbeispiel 11 demonstriert im Vergleich zu Beispiel 10, dass die Erhöhung des VAC-Anteils in der Vorlage auf nicht mehr erfindungsgemäße 75 Gew.-% auf zu geringe Adhäsionswerte führt, die Haftung auf Polystyrol wird sogar etwas verschlechtert.

Vergleichsbeispiel 13 demonstriert, im Vergleich zu Beispiel 10 und Beispiel 12, mit 50 Gew.-% bzw. 70 Gew.-% Ethylen in der Vorlage, dass die Reduzierung der Ethylenvorlage auf 30 Gew.-% zu geringen Adhäsionswerten führt, die Haftung auf Polystyrol wurde signifikant verschlechtert.

Beispiel 14 demonstriert die Verbesserung der Adhäsionswerte bei erhöhtem Ethylenanteil am Gesamtmonomer von 32 Gew.-% generell, und im Speziellen im Vergleich zu Beispiel 10, ohne dass die Kohäsion negativ beeinflusst wird.

Die Beispiele 15 bis 17 zeigen den positiven Einfluss an steigenden Emulgatoranteilen, bezogen auf Gesamtmonomer, auf die Adhäsionswerte, wiederum verbunden mit abnehmendem K-Wert.

Für die Beispiele 17 bis 19 wurde die Ethylen-Vorlage von 50 Gew.-% auf 100 Gew.-% erhöht und gleichzeitig der Anteil Emulgator, bezogen auf Gesamtmonomer, verringert. Dabei wurden jeweils sehr gute Adhäsionsverbesserungen erreicht.

Die Beispiele 20 bis 22 und 15 und 9 demonstrieren insgesamt sehr gute Adhäsionswerte bei nur gering streuender Kohäsion für unterschiedliche EO-Kettenlänge der nichtionischen Isotridecylethöxylate, die unter sonst identischen Bedingungen eingesetzt wurden.

Die Beispiele 23 bis 29 veranschaulichen den erfindungsgemäßen Einsatz unterschiedlicher nichtionischer ethoxylierter Emulgatoren und deren Mischungen, der zu Adhäsionsverbesserungen zwischen 62 % und 110 % auf Polystyrol und zwischen 54 % und 133 % auf Polyethylenterephthalat führt, wobei Kohäsionswerte zwischen 0,5 und 0,8 N/mm$^2$ erzielt wurden.

In den Beispielen 30 bis 36 wurden Mischungen aus nichtionischen Isotridecylethoxylaten eingesetzt.

Für Beispiel 31 wurde die Konzentration der Dosierung 2 im Vergleich zu Beispiel 30 auf ein Viertel reduziert, was zu einer Erhöhung des K-Wertes und einer Reduzierung der Adhäsion auf hohem Niveau führte.

Für die Beispiele 32 und 33 wurde das gesamte Ethylen vorgelegt, was zu einer deutlichen Adhäsionsverbesserung führte, bzw. eine Absenkung des Ethylenanteils bezogen auf Gesamtmonomer im Beispiel 33 erlaubte, ohne die gute Adhäsion auf Polystyrol zu verändern (Beispiel 33 im Vergleich zu Beispiel 30).

In der Reihenfolge der Beispiele 30, 34, 35 und 36 wurde der Anteil an VAC-Vorlage, unter sonst gleichen Bedingungen, von 25 Gew.-% auf bis zu 12,5 Gew.-% reduziert. Dies führt zu einer Abnahme des K-Wertes und zu einer Verbesserung der insgesamt hohen Kohäsionswerte, wobei für die Adhäsion auf Polyethylenterephthalat ein hohes, etwa konstantes Niveau erreicht wurde (etwa 200 ± 15 % Adhäsionsverbesserung, verglichen mit dem emulgatorfreien Produkt).

Für Vergleichsbeispiel 37 bis Beispiel 39 wurde der massemittlere Polymerisationsgrad des eingesetzten Polyvinylalkohols variiert.

Das emulgatorfreie Vergleichsbeispiel 37 dient dem Vergleich mit Beispiel 38, für das wiederum eine deutliche Adhäsionsverbesserung ausgewiesen wird, ohne dass hierbei der K-Wert verändert ist. Die Ausführungsformen der Beispiele 38 und 39 eröffnen die Möglichkeit einer etwaig gewünschten Viskositätsregulierung für die Polymerdispersion durch Variation des massemittleren Polymerisationsgrades des Polyvinylalkohols, auch durch Polyvinylalkohol-Mischungen, bei Erhalt eines insgesamt hohen Adhäsionsniveaus.

Beispiel 40 veranschaulicht, dass auch bei Einsatz von modifiziertem Polyvinylalkohol, hier Ethylen-modifizierter Polyvinylalkohol, sehr gute Adhäsionseigenschaften erzielt werden können.

Beispiel 41 demonstriert, dass auch bei Einsatz von Hydroxyethylcellulose sehr hohe Adhäsionswerte bei ausreichender Kohäsion erzielbar sind.

Für die Beispiele 42 und 43 wurden erfindungsgemäß nichtionische Ethoxylate linearer, gesättigter, nativer Fettalkohole eingesetzt, was zur gewünschten Adhäsionsverbesserungen führte.

Für die Beispiele 44 ,47, 48, sowie die Vergleichsbeispiele 45 und 46, wurden verschiedene Emulgatoren und deren Mischungen eingesetzt. Bei alleinigem Einsatz eines anionischen, ethoxylierten Fettalkohols im Vergleichsbeispiel 45 ist die Adhäsion unzureichend und nimmt auf Polystyrol sogar ab.

Für die Beispiele 46 bis 48 wurde der Anteil an Emulgatorvorlage zwischen Null und 100 Gew.-%, bezogen auf den gesamten Emulgator erhöht. Vergleichsbeispiel 46 demonstriert, dass ohne Emulgatorvorlage die notwendige Adhäsionsverbesserung nicht erreichbar ist. Die Adhäsion auf Polyethylenterephthalat nimmt hierbei sogar deutlich ab. Wurde hingegen eine Emulgatormischung aus nichtionogenem und anionogenem, ethoxylierten Emulgatoren mit ausreichender Emulgator-Vorlage eingesetzt, wie in den Beispielen 47 und 48, konnten deutliche Adhäsionsverbesserungen erzielt werden.

Die Beispiele 49 bis 56 sind Vergleichsbeispiele für verschiedene anionische Emulgatoren, die Teils EO-Gruppen enthalten. Solche anionischen Emulgatoren führen, wenn sie allein und nicht in Abmischung mit nichtionischen ethoxylierten Alkoholen, eingesetzt werden, im Einzelfall zu einer Verbesserung der Adhäsion zu einem Polymersubstrat. Die Adhäsion zum zweiten Polymersubstrat wird aber gleichzeitig verschlechtert. Vergleichsbeispiel 55, verglichen mit Vergleichsbeispiel 54, zeigt, dass auch eine Verringerung der VAC-Vorlage von 50 Gew.-% auf 25 Gew.-% an diesem Sachverhalt nichts ändert: Zwar wird die Adhäsion auf Polyethylenterephthalat durch diese Maßnahme prozentual, verglichen mit dem emulgatorfreien Produkt, angehoben, aber auf Polystyrol wird keinerlei Adhäsionsverbesserung erreicht. Absolut sind die Schälfestigkeiten für Vergleichsbeispiel 55 sogar geringer als für Vergleichsbeispiel 54.

Vergleichsbeispiel 57 verdeutlicht, dass auch der Einsatz oftmals noch empfohlener Alkylphenolethoxylate nicht zur angestrebten prozentualen Adhäsionsverbesserung auf zwei verschiedenen Polymersubstraten in erforderlichem Umfange führt.

Mit den Vergleichsbeispielen 58 und 58-A wird demonstriert, dass durch nachträglichen Zusatz von Emulgator, im Anschluss an eine emulgatorfreie Polymerisation, die Adhäsion des Klebstofffilms zu Polystyrol und zu Polyethylenterephthalat nicht verbessert werden kann. Die angezeigte Verbesserung der Haftungssumme um einen Punkt rührt aus einer besseren Haftungsbewertung auf einem Weich-PVC-Substrat.

Mit den Vergleichsbeispielen 59 bis 61 wurde der Zusatz von Kettenreglern (chain transfer agents) während der Polymerisation, sowie für die Vergleichsbeispiele 60 und 61, der zusätzliche Einsatz vernetzend wirkenden Monomeren, getestet. Wie Vergleichsbeispiel 59 zeigt, führt der Einsatz von Kettenregler zu einer überaus deutlichen Erhöhung der Schälfestigkeiten, gleichzeitig geht aber die Kohäsion praktisch nahezu vollständig verloren. Gleichzeitiger Einsatz von vernetzenden Comonomeren führt zu einem gewissen, aber unzureichendem Anstieg der Kohäsion, wobei die Adhäsionswerte deutlich abnehmen. Wird der Kettenregler hier, wie im Vergleichsbeispiel 61, nicht mit Dosierung 3, sondern mit Dosierung 4 eingebracht, und die vernetzenden Comonomere nicht mit Dosierung 4, sondern mit Dosierung 3, wird die Kohäsion deutlich verbessert, jedoch sind die Adhäsionswerte - trotz niedrigem K-Wertes von nur 66 - nun völlig unzureichend.

Diese Vergleichsbeispiele 59 bis 61 demonstrieren insgesamt, dass der erfindungsgemäß durch Einsatz von geeigneten Emulgatoren, in Kombination mit einem geeigneten Polymerisationsverfahren, zu erzielende überraschende Effekt einer Adhäsionsverbesserung auf verschiedenen Polymersubstraten, bei ausreichend guter Kohäsion (verbesserte Adhäsions-Kohäsions-Balance), durch aus dem Stand der Technik bekanntem Einsatz von Kettenreglern (auch in Kombination mit Vernetzern) offenbar nicht erzielt werden kann.

Tabelle 1: Übersicht zu den in den Beispielen verwendeten Emulgatoren

| Handelsname | kurze chemische Charakterisierung | Kennzeichen |
|---|---|---|
| ABEX2535 | nichtionisch, Blend ethoxylierter Fettalkohole mit Isotridecyl, EO 40 | A |
| Aerosol A102 | anionisch, Polyethylenglycol, Alkyl (C10-C12), Sulfosuccinat | B |
| Aerosol MA | anionisch, Dihexylsulfosuccinat | C |
| Arkopal N100 | APEO, EO 10 | D |
| Disponil A3065 | nichtionisch, Blend modifizierter ethoxylierter Fettalkohole, EO 30 | E |
| Disponil FES 77 | anionisch, C12/C14 Fettalkonolpolglycolethersulfat, EO 30 | F |
| Disponil LS12 | nichtionisch, Fettalkoholethexylat, lineare, EO 12 | G |
| Disponil LS30 | nichtionisch, Fettalkoholethoxylat, linear, EO 30 | H |
| Emulgator K30 | anionisch, Dodecylsulfat | I |
| Emulsogen LCN217 | nichtionisch, Oxoalkohol-Ethoxylat, C11, verzweigt, EO 21 | J |
| Genapol PF20 | nichtionisch, Polymerisationsprodukt aus PO und EO, 20 % EO | K |
| Genapol PF40 | nichtionisch, Polymerisationsprodukt aus PO und EO, 40 % EO | L |
| Getlapol X050 | nichtionisch, Isotridecyl-Ethoxylat, EO 5 | M |
| Genapol X150 | nichtionisch, Isotridecyl-Ethoxylat, EO 15 | N |
| Genapol X360 | nichtionisch, Isotridecyl-Ethoxylat, EO 25 | O |
| Hostaphat 1306 | Isotridecyl-Poly-EO (EO 6) mono/diphosphoric acid ester, acid form | P |
| Rhodapex LA300SB | anionisch, C12-linear, EO 30 | Q |
| Rhodapex LA120S | anionisch, C12-linear, EO 12 | R |
| Rhodasurf TR15-40 | nichtionisch, Isotridecyl-Ethoxylat EO 15 | S |
| hodasurf TR25-25 | nichtionisch, isotridecyl-Ethoxylat ca EO 25 | T |
| Sulframin B320 | anionisch, Isotridecyl-Ethoxylat EO 20 | U |
| Anmerkung: Genapol X150 wird hier synonym zu Genapol® 1879 und Genapol X360 synonym zu Genapol® 3214 verwendet. Das für die Emulgatoren angegebene Kennzeichen wird in Tabelle 2 benutzt. | | |

Tabelle 2 : Rezepturdaten für die Beispiele

| 1 | 2 | 3 | 4 | 5 | 6 | 7 | 8 | 9 | 10 |
|---|---|---|---|---|---|---|---|---|---|
| Bsp. | MS % | Eth % | Eth-V % | VAC-V % | Kennzeichen Emulgator | ME % | ME-V % | FG-R % | COP |
| V 3 | 2,5 | 27,3 | 50 | 50 | ohne | 0,0 | 0,0 | 60,4 | |
| V 4 | 2,5 | 27,3 | 50 | 25 | ohne | 0,0 | 0,0 | 61,2 | |
| 5 | 2,5 | 27,3 | 50 | 50 | K | 2,0 | 75 | 60,4 | 12,0 |
| 6 | 2,5 | 27,3 | 50 | 25 | K | 2,0 | 75 | 61,2 | 24,1 |
| 7 | 2,5 | 27,3 | 50 | 50 | L | 2,0 | 75 | 60,4 | 12,0 |
| 8 | 2,5 | 27,3 | 50 | 50 | M | 2,0 | 75 | 60,4 | 12,0 |
| 9 | 2,5 | 27,3 | 50 | 25 | M | 2,0 | 75 | 61,2 | 24,1 |
| 10 | 2,5 | 27,3 | 50 | 50 | N | 2,0 | 75 | 60,6 | 12,0 |
| V 11 | 2,5 | 27,3 | 50 | 75 | N | 2,0 | 75 | 61,2 | |
| 12 | 2,5 | 27,3 | 70 | 50 | N | 2,0 | 75 | 61,2 | 18,3 |
| V 13 | 2,5 | 27,3 | 30 | 50 | N | 2,0 | 75 | 61,2 | |
| 14 | 2,5 | 32,0 | 50 | 50 | N | 2,0 | 75 | 61,2 | 17,9 |
| 15 | 2,5 | 27,3 | 50 | 25 | N | 1,5 | 75 | 61,2 | 11,7 |
| 16 | 2,5 | 27,3 | 50 | 25 | N | 2,0 | 75 | 60,6 | 24,1 |
| 17 | 2,5 | 27,3 | 50 | 25 | N | 2,5 | 75 | 61,6 | 42,0 |
| 18 | 2,5 | 27,3 | 70 | 25 | N | 2,0 | 75 | 61,2 | 36,6 |
| 19 | 2,5 | 27,3 | 100 | 25 | N | 1,0 | 75 | 61,2 | 10,1 |
| 20 | 2,5 | 27,3 | 50 | 25 | O | 2,0 | 75 | 61,2 | 24,1 |
| 21 | 2,5 | 27,3 | 50 | 25 | S | 2,0 | 75 | 61,2 | 24,1 |
| 22 | 2,5 | 27,3 | 50 | 25 | T | 2,0 | 75 | 61,2 | 24,1 |
| 23 | 2,5 | 27,3 | 50 | 25 | E | 2,0 | 75 | 61,2 | 24,1 |
| 24 | 2,5 | 27,3 | 50 | 25 | J | 2,0 | 75 | 61,2 | 24,1 |
| 25 | 2,5 | 27,3 | 50 | 25 | M/O = 1/1 | 1,0 | 75 | 61,2 | 4,3 |
| 26 | 2,5 | 27,3 | 50 | 25 | M/T = 1/1 | 1,0 | 75 | 61,2 2 | 4,3 |
| 27 | 2,5 | 27,3 | 50 | 25 | M/S = 1/1 | 1,0 | 75 | 61,2 | 4,3 |
| 28 | 2,5 | 27,3 | 50 | 25 | M/E = 1/1 | 1,0 | 75 | 61,2 | 4,3 |
| 29 | 2,5 | 27,3 | 50 | 25 | M/N = 1/1 | 1,0 | 75 | 61,2 | 4,3 |
| 30 | 2,5 | 27,3 | 50 | 25 | M/N = 1/1 | 2,0 | 75 | 61,2 | 24,1 |
| 31 | 2,5 | 27,3 | 50 | 25 | M/N = 1/1 | 2,0 | 75 | 60,8 | 29,1 |
| 32 | 2,5 | 27,3 | 100 | 25 | M/N = 1/1 | 2,0 | 75 | 61,2 | 57,2 |
| 33 | 2,5 | 22,0 | 100 | 23,3 | M/N = 1/1 | 2,0 | 75 | 61,2 | 35,8 |
| 34 | 2,5 | 27, | 50 | 20,5 | M/N = 1/1 | 2,0 | 75 | 61,2 | 29,3 |
| 35 | 2,5 | 27,3 | 50 | 16,6 | M/N = 1/1 | 2,0 | 75 | 61,2 | 36,2 |
| 36 | 2,5 | 27,3 | 50 | 12,5 | M/N = 1/1 | 2,0 | 75 | 61,2 | 48,1 |
| V 37 | 2,5 | 27,3 | 50 | 25 | ohne | 0,0 | 0,0 | 61,2 | |
| 38 | 2,5 | 27,3 | 50 | 25 | M/N = 1/1 | 2,0 | 75 | 61,2 | 24,1 |

(fortgesetzt)

| 1 | 2 | 3 | 4 | 5 | 6 | 7 | 8 | 9 | 10 |
|---|---|---|---|---|---|---|---|---|---|
| Bsp. | MS % | Eth % | Eth-V % | VAC-V % | Kennzeichen Emulgator | ME % | ME-V % | FG-R % | COP |
| 39 | 2,5 | 27,3 | 50 | 25 | M/N = 1/1 | 2,0 | 75 | 61,2 | 24,1 |
| 40 | 2,5 | 27, 3. | 50 | 25 | M/N= 1/1 | 2,0 | 75 | 61,2 | 24,1 |
| 41 | 1,1 | 27,3 | 50 | 25 | M/N = 1/1 | 2,0 | 75 | 60,4 | 24,1 |
| 42 | 2,5 | 27,3 | 50 | 25 | G | 2,0 | 75 | 61,2 | 24,1 |
| 43 | 2,5 | 27,3 | 50 | 25 | H | 2,0 | 75 | 61,2 | 24,1 |
| 44 | 2,5 | 27,3 | 50 | 25 | A | 2,0 | 75 | 61 2 | 24,1 |
| V 45 | 2,5 | 27,3 | 50 | 25 | R | 2,0 | 75 | 61,2 | |
| V 46 | 2,5 | 27,3 | 50 | 25 | A/R = 1/1 | 2,0 | 0,0 | 61,2 | |
| 47 | 2,5 | 27,3 | 50 | 25 | A/R = 1/1 | 2,0 | 75 | 61,2 | 24,1 |
| 48 | 2,5 | 27,3 | 50 | 25 | A/R = 1/1 | 2,0 | 100 | 61,2 | 37,0 |
| V 49 | 2,5 | 27,3 | 50 | 25 | Q | 2,0 | 75 | 61,2 | |
| V 50 | 2,5 | 27,3 | 50 | 50 | F | 2,0 | 75 | 60,4 | |
| V 51 | 2,5 | 27,3 | 50 | 50 | U | 2,0 | 75 | 60,4 | |
| V 52 | 2,5 | 27,3 | 50 | 50 | P | 2,0 | 75 | 40,4 | |
| V 53 | 2,5 | 27,3 | 50 | 50 | I | 2,0 | 75 | 60,4 | |
| V 54 | 2,5 | 27,3 | 50 | 50 | B | 2,0 | 75 | 60,4 | |
| V 55 | 2,5 | 27,3 | 50 | 25 | B | 2,0 | 75 | 61,2 | |
| V 56 | 2,5 | 27,3 | 50 | 50 | C | 2,0 | 75 | 60,4 | |
| V 57 | 2,5 | 27,3 | 50 | 50 | D | 2,0 | 75 | 60,4 | |
| V 58 | 3,5 | 27,3 | 50 | 50 | ohne | 0,0 | 0,0 | 61,0 | |
| V58A | 3,5 | 27,3 | 50 | 50 | N nachträgl. | 2,0 | 0,0 | | |
| V 59 | 2,5 | 22,0 | 50 | 50 | R/A = 2/1 | 1,5 | 67 | 60,8 | |
| V 60 | 2,5 | 22,0 | 50 | 51 | R/A = 1.33/1 | 1,7 | 86 | 60,3 | |
| V 61 | 2,5 | 22,0 | 50 | 50 | R/A = 1.33/1 | 1,7 | 86 | 60,9 | |

Legende zu Tabelle 2:
Spalte 1: Bsp.: Beispiel-Nr., V markiert Vergleichsbeispiel
Spalte 2: MS: Anteil an Schutzkolloid bezogen auf Gesamtmonomer in Gew.-%
Spalte 3: Eth: Anteil an Gesamt-Ethylen bezogen auf Gesamtcomonomer in Gew.-%
Spalte 4: Eth-V: Anteil an Vorlage-Ethylen bezogen auf Gesamt-Ethylen in Gew.-%
Spalte 5: VAC-V: Anteil an Vorlage-Vinylacetat bezogen auf Gesamtvinylacetat in Gew.-%
Spalte 6: Kennzeichen Emulgator bzw. Emulgatorgemisch nach Tabelle 1, Emulgatorgemische mit Gewichtsanteilen.
Spalte 7: ME: Anteil an Gesamt-Emulgator bezogen auf Gesamtmonomer in Gew.-%
Spalte 8: ME-V: Anteil an Vorlage-Emulgator bezogen auf Gesamt-Emulgator in Gew.-%
Spalte 9: FG-R: Festgehalt nach Rezept in Gew.-% bezogen auf Dispersion
Spalte 10: COP: criterion of process (Verfahrenskriterium)

Tabelle 3: Daten für die Polymerdispersionen

| 1 | 2 | 3 | 4 | 5 | 6 | 7 | 8 |
|---|---|---|---|---|---|---|---|
| Bsp. | FG-E % | Bf20 mPaS | B20(60%) mPas | x3,50 nm | grit ppm | K-Wert | [η] dl/g |
| V 3 | 58,3 | 324 | 758 | 2.164 | 733 | 113 | 2,45 |
| V 4 | 58,9 | 1,010 | 1.751 | 1.420 | 204 | 125 | 2,96 |
| 5 | 56,9 | 1,034 | 4.872 | 870 | 342 | 115 | 2,53 |
| 6 | 57,5 | 930 | 3.246 | 954 | 30 | 111 | 2,37 |
| 7 | 56,6 | 328 | 1.795 | 1.856 | 254 | | |
| 8 | 56,7 | 694 | 3.614 | 989 | 33 | 112 | 2,41 |
| 9 | 57,9 | 1.285 | 3.672 | 1.131 | 362 | 100 | 1,95 |
| 10 | 59,3 | 1.485 | 2.107 | 873 | 38 | | |
| V 11 | 59,5 | 1.040 | 1.335 | 973 | 898 | | |
| 12 | 59,9 | 1.660 | 1.745 | 1.000 | 87 | 105 | 2,14 |
| V 13 | 58,2 | 1.020 | 2.509 | 934 | 276 | | |
| 14 | 58,2 | 1.025 | 2.521 | 954 | 88 | 114 | 2,49 |
| 15 | 59,6 | 2.380 | 2.907 | 981 | 35 | 119 | 2,70 |
| 16 | 60,7 | 5.060 | 3.566 | 984 | 48 | | |
| 17 | 60,1 | 3.860 | 3.672 | 802 | 240 | 91 | 1,64 |
| 18 | 58,7 | 2.290 | 4.387 | 841 | 411 | 101 | 1,99 |
| 19 | 59,6 | 3.780 | 4.617 | 1.243 | 60 | 107 | 2,21 |
| 20 | 61,4 | 3.300 | 1.639 | 797 | 109 | 120 | 2,74 |
| 21 | 59,9 | 3.600 | 3.785 | 976 | 292 | | |
| 22 | 59,7 | 2.210 | 2.568 | 823 | 166 | 122 | 2,83 |
| 23 | 60,5 | 2.040 | 1.589 | 850 | 62 | 120 | 2,74 |
| 24 | 61,8 | 6.280 | 2.553 | 845 | 49 | 123 | 2,87 |
| 25 | 59,3 | 1.830 | 2.597 | 1.343 | 65 | 117 | 2,61 |
| 26 | 60,1 | 2.840 | 2.701 | 1.376 | 102 | 114 | 2,49 |
| 27 | 59,6 | 1.125 | 1.374 | 1.337 | 232 | 111 | 2,37 |
| 28 | 59,5 | 2.130 | 2.735 | 1.315 | 110 | 115 | 2,53 |
| 29 | 59,6 | 2.170 | 2.650 | 1.466 | 97 | 113 | 2,45 |
| 30 | 59,0 | 2.250 | 3.710 | 992 | 329 | 100 | 1,95 |
| 31 | 59,7 | 6.720 | 7.808 | 1.036 | 224 | 107 | 2,21 |
| 32 | 59,3 | 5.600 | 7.947 | 848 | 121 | 81 | 1,32 |
| 33 | 60,1 | 7.900 | 7.515 | 902 | 89 | 82 | 1,35 |
| 34 | 60,0 | 4.440 | 4.440 | 956 | 59 | 92 | 1,67 |
| 35 | 59,3 | 3.000 | 4.257 | 960 | 84 | 91 | 1,64 |
| 36 | 59,4 | 3.940 | 5.318 | 886 | 191 | 87 | 1,51 |
| V 37 | 57,1 | 1.290 | 5.499 | 2.512 | 156 | 87 | 1,51 |
| 38 | 57,8 | 5.280 | 15.862 | 865 | 140 | 100 | 1,95 |
| 39 | 57,9 | 5.020 | 14.345 | 993 | 36 | 94 | 1,74 |

(fortgesetzt)

| 1 | 2 | 3 | 4 | 5 | 6 | 7 | 8 |
|---|---|---|---|---|---|---|---|
| Bsp. | FG-E % | Bf20 mPaS | B20(60%) mPas | x3,50 nm | grit ppm | K-Wert | [η] dl/g |
| 40 | 57,6 | 5.680 | 18.858 | 2.683 | 106 | 76 | 1,17 |
| 41 | 57,5 | 650 | 2.269 | 2.783 | 183 | 77 | 1,20 |
| 42 | 59,3 | 1.440 | 2.043 | 1.275 | 40 | 102 | 2,02 |
| 43 | 60,3 | 2.510 | 2.160 | 669 | 119 | 117 | 2,61 |
| 44 | 61,4 | 2.670 | 1.326 | 782 | 81 | 119 | 2,70 |
| V 45 | 61,5 | 6.380 | 3.014 | 713 | 187 | 113 | 2,45 |
| V 46 | 60,9 | 4.920 | 3.137 | 972 | 157 | | |
| 47 | 61,0 | 4.060 | 2.463 | 633 | 139 | 112 | 2,41 |
| 48 | 61,3 | 3.820 | 1.994 | 818 | 425 | | |
| V 49 | 61,6 | 3.710 | 1.667 | 718 | 146 | | |
| V 50 | 58,9 | 3.860 | 6.690 | 588 | 191 | | |
| V 51 | 58,6 | 6.200 | 12.485 | 722 | 757 | | |
| V 52 | 57,1 | 1.205 | 5.137 | 827 | 164 | | |
| V 53 | 58,6 | 1.750 | 3.524 | 883 | 200 | | |
| V 54 | 58,3 | 2.070 | 4.843 | 923 | 502 | 118 | 2,66 |
| V 55 | 60,0 | 2.490 | 2.490 | 1.136 | 135 | 111 | 2,37 |
| V 56 | 58,3 | 504 | 1.179 | 945 | 442 | | |
| V 57 | 56,6 | 1.040 | 5.693 | 915 | 262 | 109 | 2,29 |
| V 58 | 57,8 | 1.300 | 3.905 | 1.383 | 222 | | |
| V 59 | 59,4 | 6.910 | 9.328 | 534 | 475 | | |
| V 60 | 58,8 | 4.120 | 7.507 | 1.293 | 205 | | |
| V 61 | 58,1 | 4.360 | 11.274 | 3.434 | 851 | 66 | 0, 90 |

Legende zu Tabelle 3:

Spalte 1: Bsp.: Beispiel-Nr., V markiert Vergleichsbeispiel Spalte 2: FG-E: experimenteller Festgehalt in Gew.-% bezogen auf Dispersion Spalte 3: Bf20: experimentelle Brookfieldviskosität in mPas Spalte 4: Bf20(60%): für einen Festgehalt von 60% aus Spalten 1 und 2 sowie aus Spalte 9 der Tabelle 1 berechnete Viskosität Spalte 5: x3,50: Zentralwert der Volumenverteilungsfunktion der Teilchengröße in nm Spalte 6: grit: Siebrückstand > 40 μm in ppm bezogen auf Dispersion Spalte 7: K-Wert Spalte 8: Grenzviskositatszahl, ermittelt aus dem K-Wert, in dl/g

Tabelle 4: Klebstoffeigenschaften der Polymerdispersionen

| 1 | 2 | 3 | 4 | 5 | 6 | 7 | 8 | 9 |
|---|---|---|---|---|---|---|---|---|
| Bsp | AZG sec | Kohäs. N/mm² | HS | Adh PS N/cm | Adh PET1 N/cm | Adh PET2 N/cm | Δ% Adh PS | Δ% Adh PET1 |
| V 1 | 1,4 | 0,5 | 15 | 10,8 | 2,5 | 0,5 | - | - |
| V 2 | 2,4 | < 0.1 | 10 | 4,8 | 7,6 | 3,0 | - | - |
| V 3 | 1,4 | 1,3 | 17 | 3,5 | 3,4 | | 0 | 0 |

(fortgesetzt)

| 1 | 2 | 3 | 4 | 5 | 6 | 7 | 8 | 9 |
|---|---|---|---|---|---|---|---|---|
| Bsp | AZG sec | Kohäs. N/mm² | HS | Adh PS N/cm | Adh PET1 N/cm | Adh PET2 N/cm | △% Adh PS | △% Adh PET1 |
| V 4 | 1,2 | 1,1 | 18 | 2,9 | 2,4 | 1,5 | 0 | 0 |
| 5 | 1,2 | 0,6 | 16 | 5,7 | 4,6 | 3,3 | 63 | 35 |
| 6 | 1,2 | 0,5 | 15 | 5,8 | 4,8 | 3,7 | 100 | 100 |
| 7 | 1,9 | 1,1 | 16 | 4,2 | 4,1 | 3,2 | 20 | 20 |
| 8 | 1,3 | 0,5 | 15 | 4, 6 | 4,1 | 2,8 | 31 | 21 |
| 9 | 1,4 | 0,5 | 16 | 6,5 | 5,3 | 2,8 | 124 | 121 |
| 10 | 1,6 | 0,5 | 15 | 5,0 | 4,1 | 2,7 | 43 | 21 |
| V 11 | 1,4 | 0,6 | 15 | 3,4 | 3,7 | 2,8 | -3 | 9 |
| 12 | 1,2 | 0,4 | 15 | 6,9 | 4,5 | 2,5 | 97 | 32 |
| V13 | 1,5 | 0,6 | 15 | 2,9 | 3,8 | 3,4 | -17 | 12 |
| 14 | 1,2 | 0,5 | 14 | 5,4 | 4,9 | 2,4 | 54 | 44 |
| 15 | 1,4 | 0,6 | 14 | 4,9 | 4,7 | 2,4 | 69 | 96 |
| 16 | 1,2 | 0,4 | 15 | 5,3 | 4,8 | 2,6 | 83 | 100 |
| 17 | 2,2 | 0,3 | 14 | 6,6 | 4,9 | 2,3 | 128 | 104 |
| 18 | 1,2 | 0,3 | 16 | 6,1 | 5,4 | 2,5 | 110 | 125 |
| 19 | 1,4 | 0,6 | 17 | 5,6 | 4,9 | 2,6 | 93 | 104 |
| 20 | 1,9 | 0,5 | 14 | 5,1 | 4,7 | 2,7 | 76 | 96 |
| 21 | 1,4 | 0,4 | 18 | 6,2 | 5,2 | 2,3 | 114 | 117 |
| 22 | 1,8 | 0,5 | 15 | 5,4 | 4,7 | 2,5 | 86 | 96 |
| 23 | 1,8 | 0,5 | 14 | 6,1 | 4,5 | 2,5 | 110 | 88 |
| 24 | 1,2 | 0,5 | 15 | 5,7 | 3,7 | 2,1 | 97 | 54 |
| 25 | 1,6 | 0,8 | 16 | 5,2 | 4,2 | 2,7 | 79 | 75 |
| 26 | 1,4 | 0,8 | 15 | 4,6 | 4,6 | 2,8 | 59 | 92 |
| 27 | 1,2 | 0,8 | 15 | 4,5 | 4,1 | 2,9 | 55 | 71 |
| 28 | 1,2 | 0,7 | 17 | 4,7 | 4,4 | 2,8 | 62 | 83 |
| 29 | 1,6 | 0,7 | 15 | 5,4 | 5,6 | 2,8 | 86 | 133 |
| 30 | 1,4 | 0,3 | 15 | 6,5 | 5,6 | 2,8 | 124 | 133 |
| 31 | 1,2 | 0,4 | 15 | 5,9 | 5,2 | 2,5 | 103 | 117 |
| 32 | 1,2 | 0,3 | 15 | 13,9 | 6,1 | 2,5 | 379 | 154 |
| 33 | 1,2 | 0,3 | 16 | 5,4 | 4,7 | 3,3 | 86 | 96 |
| 34 | 1,2 | 0,3 | 15 | 7,0 | 5,9 | 2,5 | 141 | 146 |
| 35 | 1,4 | 0,3 | 15 | 10,8 | 7,5 | 2,6 | 272 | 213 |
| 36 | 1,2 | 0,3 | 14 | 11,7 | 6,9 | 2,7 | 303 | 188 |
| V 37 | 1,8 | 1,1 | 15 | 2,9 | 3,1 | 1,1 | 0 | 0 |
| 38 | 1,2 | 0,4 | 15 | 5,4 | 5,3 | 2,3 | 86 | 71 |
| 39 | 1,2 | 0,4 | 15 | 4,8 | 4,8 | 2,9 | 66 | 100 |

(fortgesetzt)

| 1 | 2 | 3 | 4 | 5 | 6 | 7 | 8 | 9 |
|---|---|---|---|---|---|---|---|---|
| Bsp | AZG sec | Kohäs. N/mm$^2$ | HS | Adh PS N/cm | Adh PET1 N/cm | Adh PET2 N/cm | Δ% Adh PS | Δ% Adh PET1 |
| 40 | 1,6 | 0,4 | 18 | 8,0 | 4,7 | 2,5 | - | - |
| 41 | 1,2 | 0,3 | 18 | 10,0 | 5,5 | 2,2 | - | - |
| 42 | 1,2 | 0,4 | 15 | 5,2 | 4,3 | 2,8 | 79 | 79 |
| 43 | 1,2 | 0,5 | 16 | 4,6 | 3,6 | 2,0 | 59 | 50 |
| 44 | 1,3 | 0,6 | 16 | 5,4 | 4,3 | 2,0 | 86 | 79 |
| V 45 | 1,4 | 0,5 | 16 | 2,4 | 2,7 | 2,4 | -17 | 13 |
| V 46 | 1,8 | 0,9 | 15 | 3,2 | 1,2 | 1,5 | 10 | -50 |
| 47 | 1,3 | 0,5 | 15 | 5,4 | 3,0 | 2,0 | 86 | 25 |
| 48 | 1,8 | 0,5 | 14 | 6,6 | 3,3 | 2,0 | 128 | 38 |
| V 49 | 1,6 | 0,6 | | 4,1 | 1,9 | 1,9 | 41 | -21 |
| V 50 | 1,4 | 0,6 | | 4,5 | 1,7 | | 29 | -50 |
| V 51 | 1,2 | 0,5 | | 4,6 | 1,5 | | 31 | -56 |
| V 52 | 1,2 | 0,4 | | 3,0 | 2,9 | | -14 | -15 |
| V 53 | 1,6 | 0,6 | | 2,9 | 2,6 | | -17 | -24 |
| V 54 | 1, 2 | 0,7 | | 3,3 | 4,9 | 2,1 | -6 | 44 |
| V 55 | 1,2 | 0,6 | | 2,8 | 4,4 | 2,7 | -3 | 83 |
| V 56 | 2,4 | 0,6 | | 4,1 | 2,5 | | 17 | -26 |
| V 57 | 1,2 | 0,4 | 14 | 5,3 | 3,9 | | 51 | 15 |
| V 58 | 1,4 | 1,3 | 17 | 3,1 | 3,0 | 2,3 | 0 | 0 |
| V 58A | 1,6 | 1,3 | 16 | 3,3 | 3,0 | 2,4 | 6 | 0 |
| V 59 | 1,4 | 0,04 | 12 | 14,4 | 15,3 | | | |
| V 60 | 2,2 | 0,10 | 13 | 4,4 | 3,0 | | | |
| V 61 | 3,4 | 0,80 | 13 | 2,4 | 1,8 | | | |

Legende zu Tabelle 4:

Spalte 1: Bsp.: Beispiel-Nr., V markiert Vergleichsbeispiel Spalte 2: AZG: Abbindegeschwindigkeit, gemessen als AZG in sec Spalte 3: Kohäs.: Kohäsion ermittelt als Wärmestandfestigkeit in N/mm$^2$

Spalte 4: HS: Haftungssumme Spalte 5: Adh PS: Adhäsion/Schälfestigkeit in N/cm auf Polystyrol Sidaplax® PF 90 bei einer Abzugsgeschwindigkeit von 5 mm/min Spalte 6: Adh PET1: Adhäsion/Schalfestigkeit in N/cm auf Polyethylenterephthalat Hostaphan® RN125 von 10 mm/min Spalte 7: Adh PET2: Adhäsion/Schälfestigkeit in N/cm auf Polyethylenterephthalat Hostaphan® RN125 von 900 mm/min Spalte 8: Δ% Adh PS: Prozentuale Änderung der Adhäsion auf Polystyrol gemäß Spalte 5 bezogen auf ein unter sonst gleichen Bedingungen aber in Abwesenheit von Emulgator hergestellten Polymerisats Spalte 9: Δ% Adh PET1: Prozentuale Änderung der Adhäsion auf Polyethylenterephthalat gemäß Spalte 6 bezogen auf ein unter sonst gleichen Bedingungen aber in Abwesenheit von Emulgator hergestellten Polymerisats

**Patentansprüche**

1. Verfahren zur Herstellung von Vinylacetat-Ethylen-Mischpolymerisaten mittels radikalisch initiierter Emulsionspolymerisation von Vinylacetat und 18 bis 34 Gew.-% Ethylen, bezogen auf das Gesamtgewicht der Monomere Vinylacetat und Ethylen, und gegebenenfalls weiterer Comonomere, **dadurch gekennzeichnet, dass** in Gegenwart von mindestens einem Schutzkolloid und von 0,5 bis 4 Gew.-%, bezogen auf die Gesamtmenge an Monomeren, von mindestens einem nichtionischen, ethoxylierten Emulgator mit verzweigtem oder linearem Alkylrest oder in Form von Ethylenoxid-Propylenoxid-Copolymeren, und unter Ausschluss von Kettenregler, polymerisiert.wird, wobei vor der Initiierung der Polymerisation 10 bis 70 Gew.-% des Vinylacetat-Monomeren und 40 bis 100 Gew.-% des Ethylen-Monomeren vorgelegt werden, der Schutzkolloid-Anteil zu bis zu 100 Gew.-% vorgelegt wird, der Emulgator-Anteil zu mindestens 25 Gew.-% vorgelegt wird, und die restlichen Anteile an Monomeren, Schutzkolloid und Emulgator während der Polymerisation zudosiert werden, wobei so vorgegangen wird, dass das Verfahrenskriterium COP (criterion of process)

   $2{,}5 \leq COP\ 70$ erfüllt wird, wobei gilt

   $COP = 100 \times (ETM^{2{,}5} \times ETV^{1{,}25} \times EA^{2{,}5} \times EV^{1{,}5}\ 5 \times VV^{-1})$, mit

   ETM = MEt/MM, ETV = MEtV/MEt, EA = 100 ME/MM, EV = MEV/ME und VV = MVacV/MVac, mit

   MEt = Gesamtmasse Ethylen in kg, MM = Gesamtmasse Monomer in kg, MEtV = Masse Ethylen-Vorlage in kg, ME = Gesamtmasse Emulgator in kg; MEV = Masse Emulgator-Vorlage in kg; MVacV = Masse Vinylacetat-Vorlage in kg, und MVac = Gesamtmasse Vinylacetat in kg.

2. Verfahren nach Anspruch 1, **dadurch gekennzeichnet, dass** ausschließlich Vinylacetat und Ethylen copolymerisiert werden, wobei der Ethylenanteil 22 bis 32 Gew.-%, bezogen auf das Gesamtgewicht der Monomere, beträgt.

3. Verfahren nach Anspruch 1 oder 2, **dadurch gekennzeichnet, dass** als Schutzkolloid teilverseifte Polyvinylalkohole mit einem mittleren Hydrolysegrad von 86 bis 96 Mol-% und einem massemittleren Polymerisationsgrad von 600 bis 2000, und /oder
   vollverseifte Polyvinylalkohole mit einem mittleren Hydrolysegrad von 96,1 bis 99,9 und einem mittleren Polymerisationsgrad von 600 bis 3500,
   und/oder
   vollverseifte Ethylen-modifizierte Polyvinylalkohole mit einem mittleren Hydrolysegrad von 94,5 bis 99,9 und einem massemittleren Polymerisationsgrad von 500 bis 5000,
   und/ oder
   Hydroxyethylcellulose, mit einer Viskosität einer 2 Gew.-%-igen wässrigen Lösung von < 1500 mPas,
   eingesetzt werden.

4. Verfahren nach Anspruch 1 bis 3, **dadurch gekennzeichnet, dass** das Schutzkolloid in einer Menge von 1 bis 4 Gew.-%, bezogen auf das Gesamtgewicht der Monomere, bei der Polymerisation eingesetzt wird.

5. Verfahren nach Anspruch 1 bis 4, **dadurch gekennzeichnet, dass** der Emulgator in einer Menge von 0,8 bis 3 Gew.-%, bezogen auf das Gesamtgewicht der Monomere, bei der Polymerisation eingesetzt wird.

6. Verfahren nach Anspruch 1 bis 5, **dadurch gekennzeichnet, dass** als Emulgatoren ein oder mehrere aus der Gruppe umfassend nichtionische, ethoxylierte Fettalkohole mit verzweigtem oder geradkettigem Alkylrest, wobei der Alkylrest 4 bis 40 C-Atome aufweist und jeweils mit 2 bis 60 Ethylenoxideinheiten ethoxyliert ist, und Copolymere von Ethylenoxid (EO) und Propylenoxid (PO) mit einem Ethylenoxid-Anteil von 10 bis 40 Gew.-% und einer Molmasse von 1500 bis 3000, eingesetzt werden.

7. Verfahren nach Anspruch 1 bis 6, **dadurch gekennzeichnet, dass** nur ein einzelner Emulgator eingesetzt wird, aus der Gruppe umfassend nichtionische Isotridecylethoxylate mit 2 bis 60 EO-Einheiten, nichtionische, ethoxylierte lineare Fettalkohole mit 4 bis 40 EO-Einheiten sowie Copolymere von Ethylenoxid (EO) und Propylenoxid (PO) mit einem Ethylenoxid-Anteil von 10 bis 40 Gew.-%.

8. Verfahren nach Anspruch 1 bis 6, **dadurch gekennzeichnet, dass** Gemische von Emulgatoren eingesetzt werden umfassend Mischungen aus zwei nichtionischen, ethoxylierten Isotridecylalkoholen, wobei eine Komponente 4 bis 18 EO-Einheiten enthält und die zweite Komponente 12 bis 40 EO-Einheiten aufweist, sowie
   Mischungen aus einem nichtionischen, ethoxylierten Isotridecylalkohol mit 2 bis 60 EO-Einheiten und einem ethoxylierten, linearen nichtionischen Emulgator aus der Gruppe umfassend lineare Fettalkohole mit 4 bis 40 EO-Einheiten und Copolymere von Ethylenoxid (EO) und Propylenoxid (PO), sowie

Mischungen aus einem oderer mehreren nichtionischen, ethoxylierten Isotridecylalkohol(en) mit 2 bis 60 EO-Einheiten,

oder aus einem oder mehreren nichtionischen, ethoxylierten linearen Fettalkohol(en) mit 4 bis 40 EO-Einheiten, oder Copolymere von Ethylenoxid (EO) und Propylenoxid (PO) mit einem Ethylenoxid-Anteil von 10 bis 40 Gew.-%, jeweils mit einem oder mehreren ethoxylierten anionischen Emulgator(en), bevorzugt aus der Gruppe umfassend lineare Alkylethersulfate auf Basis von linearen Fettalkoholen mit 4 bis 40 C-Atomen und 4 bis 40 EO-Einheiten, sowie Halbester der Sulfobernsteinsäure von linearen Fettalkoholen mit 4 bis 40 C-Atomen und 4 bis 40 EO-Einheiten.

9. Verfahren nach Anspruch 1 bis 8, **dadurch gekennzeichnet, dass** zur Initiierung eine Kombination aus Wasserstoffperoxid und Natriumformaldehydsulfoxylat eingesetzt wird.

10. Verfahren nach Anspruch 1 bis 9, **dadurch gekennzeichnet, dass** Vinylacetat zu einem Anteil von 15 bis 50 Gew.-% vor der Initiierung vorgelegt wird.

11. Verfahren nach Anspruch 1 bis 10, **dadurch gekennzeichnet, dass** Ethylen zu einem Anteil von 50 bis 75 Gew.-% vor der Initiierung vorgelegt wird.

12. Verfahren nach Anspruch 1 bis 11, **dadurch gekennzeichnet, dass** der Emulgator-Anteil vor der Initiierung der Polymerisation zu 55 bis 85 Gew.-% vorgelegt wird.

13. Verfahren nach Anspruch 1 bis 12, **dadurch gekennzeichnet, dass** der Schutzkolloid-Anteil vor der Initiierung der Polymerisation zu 100 Gew.-% vorgelegt wird.

14. Vinylacetat-Ethylen-Mischpolymerisate erhalten mittels radikalisch initiierter Emulsionspolymerisation nach Anspruch 1 bis 13, **dadurch gekennzeichnet, dass** der K-Wert des Vinylacetat-Ethylen-Mischpolymerisats von $75 \leq$ K-Wert $< 125$ beträgt.

15. Vinylacetat-Ethylen-Mischpolymerisate erhalten mittels radikalisch initiierter Emulsionspolymerisation nach Anspruch 1 bis 13, **dadurch gekennzeichnet, dass** deren Klebefilme im Klebeverbund eine Kohäsion, gemessen als Wärmestandfestigkeit, von mindestens 0,2 N/mm$^2$ aufweisen und eine Adhäsion von

> 3,5 N/cm, vorzugsweise wenigstens 4,1 N/cm Schälfestigkeit für Polyethelenterephthalat-Folie Hostaphan® RN125 verklebt mit Baumwolle bei einer Abzugsgeschwindigkeit von 10 mm/min, und

wenigstens 4,2 N/cm, bevorzugt wenigstens 4,5 N/cm, besonders bevorzugt wenigstens 5,0 N/cm für Polystyrol-Folie Sidaplax® Polyflex 90 verklebt mit Baumwolle bei einer Abzugsgeschwindigkeit von 5 mm/min.

16. Vinylacetat-Ethylen-Mischpolymerisate erhalten mittels radikalisch initiierter Emulsionspolymerisation nach Anspruch 1 bis 13, **dadurch gekennzeichnet, dass** diese auf mindestens zwei verschiedenen, beliebigen Polymersubstraten, wie Polystyrol oder Polyethylenterephthalat, um jeweils mindestens 20 % höhere Adhäsion, ermittelt als Schälfestigkeit zeigen, verglichen mit Vinylacetat-Ethylen-Mischpolymerisaten, die unter sonst identischen Bedingungen, in Abwesenheit von Emulgatoren, polymerisiert wurden.

17. Verwendung der Verfahrensprodukte von Anspruch 1 bis 13 oder von Vinylacetat-Ethylen-Mischpolymerisaten nach Anspruch 14 bis 16 als Klebemittel oder in Formulierungen von Klebemitteln.

18. Verwendung nach Anspruch 17 in Formulierungen von Papierklebemitteln, Verpackungsklebstaffen, Holzklebstoffen und Klebemitteln für gewebte und nichtgewebte Fasermaterialien.

19. Verwendung nach Anspruch 17 zur Verklebung von Kunststofffolien mit cellulosischen Substraten.

20. Verwendung nach Anspruch 17 zur Verklebung von Kunststoffsubstraten miteinander, beispielsweise für Folie/Folie-Verklebung.

**Claims**

1. Process for preparing vinyl acetate-ethylene copolymers by means of free-radically initiated emulsion polymerization of vinyl acetate and 18% to 34% by weight of ethylene, based on the total weight of the vinyl acetate and ethylene monomers, and, optionally, further comonomers, **characterized in that** polymerization takes place in the presence of at least one protective colloid and of 0.5% to 4% by weight, based on the total amount of monomers, of at least one nonionic, ethoxylated emulsifier with a branched or linear alkyl radical or in the form of ethylene oxide-propylene oxide copolymers, and in the absence of chain transfer agent, and, before the initiation of the polymerization, 10% to 70% by weight of the vinyl acetate monomer and 40% to 100% by weight of the ethylene monomer are included in the initial charge, up to 100% by weight of the protective colloid fraction is included in the initial charge, at least 25% by weight of the emulsifier fraction is included in the initial charge, and the remaining fractions of monomers, protective colloid and emulsifier are metered in during the polymerization, the procedure being such that the criterion of process COP meets the condition $2.5 \leq COP \leq 70$, where

$COP = 100 \times (ETM^{2.5} \times ETV^{1.25} \times EA^{2.5} \times EV^{1.5} \times VV^{-1})$ , where

$ETM = MEt/MM$, $ETV = MEtV/MEt$, $EA = 100\ ME/MM$, $EV = MEV/ME$ and $VV = MVacV/MVac$, where

$MEt$ = total mass of ethylene in kg, $MM$ = total mass of monomer in kg; $MEtV$ = mass of ethylene charge in kg, $ME$ = total mass of emulsifier in kg;

$MEV$ = mass of emulsifier charge in kg; $MVacV$ = mass of vinyl acetate charge in kg, and $MVac$ = total mass of vinyl acetate in kg.

2. Process according to Claim 1, **characterized in that** exclusively vinyl acetate and ethylene are copolymerized, the ethylene fraction being 22% to 32% by weight, based on the total weight of the monomers.

3. Process according to Claim 1 or 2, **characterized in that** use is made as protective colloid of partially hydrolysed polyvinyl alcohols having an average degree of hydrolysis of 86 to 96 mol% and a mass-average degree of polymerization of 600 to 2000,
and/or
fully hydrolysed polyvinyl alcohols having an average degree of hydrolysis of 96.1 to 99.9 and an average degree of polymerization of 600 to 3500,
and/or
fully hydrolysed ethylene-modified polyvinyl alcohols having an average degree of hydrolysis of 94.5 to 99.9 and a mass-average degree of polymerization of 500 to 5000,
and/or
hydroxyethylcellulose, with a viscosity of a 2% strength by weight aqueous solution of $\leq 1500$ mPas.

4. Process according to Claim 1 to 3, **characterized in that** the protective colloid is used in an amount of 1% to 4% by weight, based on the total weight of the monomers, in the polymerization.

5. Process according to Claim 1 to 4, **characterized in that** the emulsifier is used in an amount of 0.8% to 3% by weight, based on the total weight of the monomers, in the polymerization.

6. Process according to Claim 1 to 5, **characterized in that** use is made as emulsifiers of one or more from the group encompassing nonionic, ethoxylated fatty alcohols with a branched or linear alkyl radical, the alkyl radical having 4 to 40 C atoms and being ethoxylated in each case with 2 to 60 ethylene oxide units, and copolymers of ethylene oxide (EO) and propylene oxide (PO) with an ethylene oxide fraction of 10% to 40% by weight and a molar mass of 1500 to 3000.

7. Process according to Claim 1 to 6, **characterized in that** only one single emulsifier is used, from the group encompassing nonionic isotridecyl ethoxylates having 2 to 60 EO units, nonionic, ethoxylated linear fatty alcohols having 4 to 40 EO units, and copolymers of ethylene oxide (EO) and propylene oxide (PO) having an ethylene oxide fraction of 10% to 40% by weight.

8. Process according to Claim 1 to 6, **characterized in that** mixtures of emulsifiers are used,
encompassing mixtures of two nonionic, ethoxylated isotridecyl alcohols, one component containing 4 to 18 EO units and the second component having 12 to 40 EO units, and
mixtures of a nonionic, ethoxylated isotridecyl alcohol having 2 to 60 EO units and an ethoxylated, linear nonionic emulsifier from the group encompassing linear fatty alcohols having 4 to 40 EO units and copolymers of ethylene oxide (EO) and propylene oxide (PO), and
mixtures of one or more nonionic, ethoxylated isotridecyl alcohols having 2 to 60 EO units,
or of one or more nonionic, ethoxylated linear fatty alcohols having 4 to 40 EO units,
or copolymers of ethylene oxide (EO) and propylene oxide (PO) with an ethylene oxide fraction of 10% to 40% by weight,

in each case with one or more ethoxylated anionic emulsifiers, preferably from the group encompassing linear alkyl ether sulphates based on linear fatty alcohols having 4 to 40 C atoms and 4 to 40 EO units, and also monoesters of sulphosuccinic acid with linear fatty alcohols having 4 to 40 C atoms and 4 to 40 EO units.

**9.** Process according to Claim 1 to 8, **characterized in that** initiation is carried out using a combination of hydrogen peroxide and sodium formaldehyde-sulphoxylate.

**10.** Process according to Claim 1 to 9, **characterized in that** vinyl acetate is included in the initial charge, prior to initiation, in a fraction of 15% to 50% by weight.

**11.** Process according to Claim 1 to 10, **characterized in that** ethylene is included in the initial charge, prior to initiation, in a fraction of 50% to 75% by weight.

**12.** Process according to Claim 1 to 11, **characterized in that** the emulsifier fraction is included at 55% to 85% by weight in the initial charge prior to initiation of the polymerization.

**13.** Process according to Claim 1 to 12, **characterized in that** the protective colloid fraction is included at 100% by weight in the initial charge prior to initiation of the polymerization.

**14.** Vinyl acetate-ethylene copolymers obtained by means of free-radically initiated emulsion polymerization according to Claim 1 to 13, **characterized in that** the K value of the vinyl acetate-ethylene copolymer is from $75 \leq K$ value $< 125$.

**15.** Vinyl acetate-ethylene copolymers obtained by means of free-radically initiated emulsion polymerization according to Claim 1 to 13,
**characterized in that** their adhesive films in an adhesively bonded assembly have a cohesion, measured as thermal stability, of at least 0.2 N/mm$^2$ and an adhesion of
> 3.5 N/cm, preferably at least 4.1 N/cm peel strength for polyethylene terephthalate film Hostaphan® RN125 bonded to cotton with a removal speed of 10 mm/min, and
at least 4.2 N/cm, preferably at least 4.5 N/cm, more preferably at least 5.0 N/cm for polystyrene film Sidaplax® Polyflex 90 bonded to cotton with a removal speed of 5 mm/min.

**16.** Vinyl acetate-ethylene copolymers obtained by means of free-radically initiated emulsion polymerization according to Claim 1 to 13,
**characterized in that** on at least two different, arbitrary polymer substrates, such as polystyrene or polyethylene terephthalate, they exhibit adhesion, determined as peel strength, which is higher by in each case at least 20% as compared with vinyl acetate-ethylene copolymers polymerized, under otherwise identical conditions, in the absence of emulsifiers.

**17.** Use of the process products of Claim 1 to 13 or of vinyl acetate-ethylene copolymers according to Claim 14 to 16 as adhesives or in formulations of adhesives.

**18.** Use according to Claim 17 in formulations of paper adhesives, packaging adhesives, wood adhesives and adhesives for woven and non-woven fibre materials.

**19.** Use according to Claim 17 for bonding polymeric films to cellulosic substrates.

**20.** Use according to Claim 17 for bonding plastics substrates to one another, such as for film/film bonding.

**Revendications**

**1.** Procédé de fabrication de copolymères d'acétate de vinyle-éthylène par polymérisation en émulsion initiée par voie radicalaire d'acétate de vinyle et de 18 à 34 % en poids d'éthylène, par rapport au poids total des monomères acétate de vinyle et éthylène, et éventuellement d'autres comonomères, **caractérisé en ce que** la polymérisation est réalisée en présence d'au moins un colloïde protecteur et de 0,5 à 4 % en poids, par rapport à la quantité totale des monomères, d'au moins un émulsifiant éthoxylé non ionique à radical alkyle ramifié ou linéaire ou sous la forme de copolymères oxyde d'éthylène-oxyde de propylène, et avec exclusion de régulateurs de chaînes, 10 à 70 % en poids du monomère acétate de vinyle, et 40 à 100 % en poids du monomère éthylène, une proportion de colloïde protecteur de jusqu'à 100 % en poids et une proportion d'émulsifiant d'au moins 25 % en poids étant chargés initialement avant l'initiation de la polymérisation, et les proportions restantes de monomères, colloïde protecteur et émulsifiant étant ajoutées pendant la polymérisation, le procédé étant réalisé de manière à ce que le critère du procédé COP (criterion of process) $2,5 \leq \text{COP} \leq 70$ soit satisfait, avec COP = $100 \times (\text{ETM}^{2,5} \times \text{ETV}^{1,25} \times \text{EA}^{2,5} \times \text{EV}^{1,5} \times \text{VV}^{-1})$, avec ETM = MEt/MM, ETV = MEtV/MEt, EA = 100 ME/MM, EV = MEV/ME et VV = MVacV/MVac, avec

MEt = masse totale d'éthylène en kg, MM = masse totale de monomère en kg, MEtV = masse d'éthylène chargée initialement en kg, ME = masse totale d'émulsifiant en kg ; MEV = masse d'émulsifiant chargée initialement en kg ; MVacV = masse d'acétate de vinyle chargée initialement en kg et MVac = masse totale d'acétate de vinyle en kg.

2. Procédé selon la revendication 1, **caractérisé en ce qu'**exclusivement de l'acétate de vinyle et de l'éthylène sont copolymérisés, la proportion d'éthylène étant de 22 à 32 % en poids, par rapport au poids total des monomères.

3. Procédé selon la revendication 1 ou 2, **caractérisé en ce que** des alcools polyvinyliques partiellement saponifiés ayant un degré d'hydrolyse moyen de 86 à 96 % en moles et un degré de polymérisation moyen en masse de 600 à 2 000,
   et/ou
   des alcools polyvinyliques entièrement saponifiés ayant un degré d'hydrolyse moyen de 96,1 à 99,9 et un degré de polymérisation moyen de 600 à 3 500,
   et/ou
   des alcools polyvinyliques modifiés par de l'éthylène entièrement saponifiés ayant un degré d'hydrolyse moyen de 94,5 à 99,9 et un degré de polymérisation moyen en masse de 500 à 5 000,
   et/ou
   de l'hydroxyéthylcellulose ayant une viscosité d'une solution aqueuse à 2 % en poids $\leq 1\ 500$ mPas sont utilisés en tant que colloïde protecteur.

4. Procédé selon les revendications 1 à 3, **caractérisé en ce que** le colloïde protecteur est utilisé en une quantité de 1 à 4 % en poids, par rapport au poids total des monomères, lors de la polymérisation.

5. Procédé selon les revendications 1 à 4, **caractérisé en ce que** l'émulsifiant est utilisé en une quantité de 0,8 à 3 % en poids, par rapport au poids total des monomères, lors de la polymérisation.

6. Procédé selon les revendications 1 à 5, **caractérisé en ce qu'**un ou plusieurs émulsifiants choisis dans le groupe comprenant les alcools gras éthoxylés non ioniques à radical alkyle ramifié ou linéaire, le radical alkyle comprenant 4 à 40 atomes C et étant éthoxylé à chaque fois avec 2 à 60 unités oxyde d'éthylène, et les copolymères d'oxyde d'éthylène (EO) et d'oxyde de propylène (PO) ayant une proportion d'oxyde d'éthylène de 10 à 40 % en poids et une masse molaire de 1 500 à 3 000, sont utilisés en tant qu'émulsifiants.

7. Procédé selon les revendications 1 à 6, **caractérisé en ce que** seul un émulsifiant individuel est utilisé, choisi dans le groupe comprenant les éthoxylates d'isotridécyle non ioniques contenant 2 à 60 unités EO, les alcools gras linéaires éthoxylés non ioniques contenant 4 à 40 unités EO, ainsi que les copolymères d'oxyde d'éthylène (EO) et d'oxyde de propylène (PO) ayant une proportion d'oxyde d'éthylène de 10 à 40 % en poids.

8. Procédé selon les revendications 1 à 6, **caractérisé en ce que** des mélanges d'émulsifiants sont utilisés, comprenant des mélanges de deux alcools isotridécyliques éthoxylés non ioniques, un composant contenant 4 à 18 unités EO et le second composant comprenant 12 à 40 unités EO, ainsi que
   des mélanges d'un alcool isotridécylique éthoxylé non ionique contenant 2 à 60 unités EO et d'un émulsifiant non ionique linéaire éthoxylé choisi dans le groupe comprenant les alcools gras linéaires contenant 4 à 40 unités EO et les copolymères d'oxyde d'éthylène (EO) et d'oxyde de propylène (PO), ainsi que
   des mélanges d'un ou de plusieurs alcools isotridécyliques éthoxylés non ioniques contenant 2 à 60 unités EO, ou d'un ou de plusieurs alcools gras linéaires éthoxylés non ioniques contenant 4 à 40 unités EO ou de copolymères d'oxyde d'éthylène (EO) et d'oxyde de propylène (PO) ayant une proportion d'oxyde d'éthylène de 10 à 40 % en poids, à chaque fois avec un ou plusieurs émulsifiants anioniques éthoxylés, de préférence choisis dans le groupe comprenant les éther sulfates d'alkyle linéaires à base d'alcools gras linéaires contenant 4 à 40 atomes C et 4 à 40 unités EO, ainsi que les semi-esters de l'acide sulfosuccinique d'alcools gras linéaires contenant 4 à 40 atomes C et 4 à 40 unités EO.

9. Procédé selon les revendications 1 à 8, **caractérisé en ce qu'**une combinaison de peroxyde d'hydrogène et de sulfoxylate de formaldéhyde sodique est utilisée pour l'initiation.

10. Procédé selon les revendications 1 à 9, **caractérisé en ce que** l'acétate de vinyle est chargé initialement en une proportion de 15 à 50 % en poids avant l'initiation.

11. Procédé selon les revendications 1 à 10, **caractérisé en ce que** l'éthylène est chargé initialement en une proportion de 50 à 75 % en poids avant l'initiation.

12. Procédé selon les revendications 1 à 11, **caractérisé en ce qu'**une proportion d'émulsifiant de 55 à 85 % en poids est chargée initialement avant l'initiation de la polymérisation.

13. Procédé selon les revendications 1 à 12, **caractérisé en ce qu'**une proportion de colloïde protecteur de 100 % en poids est chargée initialement avant l'initiation de la polymérisation.

14. Copolymères d'acétate de vinyle-éthylène obtenus par polymérisation en émulsion initiée par voie radicalaire selon les revendications 1 à 13, **caractérisés en ce que** la valeur K du copolymère d'acétate de vinyle-éthylène est de $75 \leq$ valeur K < 125.

15. Copolymères d'acétate de vinyle-éthylène obtenus par polymérisation en émulsion initiée par voie radicalaire selon les revendications 1 à 13, **caractérisés en ce que** leurs films adhésifs présentent dans un composite adhésif une cohésion, mesurée en tant que stabilité à la chaleur, d'au moins 0,2 N/mm$^2$ et une adhésion
> 3,5 N/cm, de préférence d'au moins 4,1 N/cm, de résistance au pelage pour un film de polyéthylène téréphtalate Hostaphan® RN125 collé avec du coton à une vitesse de retrait de 10 mm/min, et
d'au moins 4,2 N/cm, de préférence d'au moins 4,5 N/cm, de manière particulièrement préférée d'au moins 5,0 N/cm pour un film de polystyrène Sidaplax® Polyflex 90 collé avec du coton à une vitesse de retrait de 5 mm/min.

16. Copolymères d'acétate de vinyle-éthylène obtenus par polymérisation en émulsion initiée par voie radicalaire selon les revendications 1 à 13, **caractérisés en ce que** ceux-ci présentent sur au moins deux substrats polymères quelconques différents, tels que du polystyrène ou du polyéthylène téréphtalate, une adhésion, calculée en tant que résistance au pelage, supérieure à chaque fois d'au moins 20 % en comparaison de copolymères d'acétate de vinyle-éthylène qui ont été polymérisés en l'absence d'émulsifiants, en conditions sinon identiques.

17. Utilisation des produits du procédé selon les revendications 1 à 13 ou de copolymères d'acétate de vinyle-éthylène selon les revendications 14 à 16 en tant qu'adhésif ou dans des formulations d'adhésifs.

18. Utilisation selon la revendication 17 dans des formulations d'adhésifs pour papier, d'adhésifs d'emballage, d'adhésifs pour bois et d'adhésifs pour matériaux fibreux tissés et non tissés.

19. Utilisation selon la revendication 17 pour le collage de films plastiques avec des substrats cellulosiques.

20. Utilisation selon la revendication 17 pour le collage de substrats plastiques les uns avec les autres, par exemple pour le collage film/film.

EP 2 401 310 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS1595402 A
- DE OS2112769 A
- US 3644262 A
- US 3708388 A
- EP 1212383 B1
- EP 890625 B1
- EP 385734 B1
- US 4267090 A
- US 5571860 A
- EP 279384 B1
- US 3769151 A
- GB 1546275 A

**In der Beschreibung aufgeführte Nicht-Patentliteratur**

- **H. G. ELIAS.** Polymere, Von Monomeren und Makromolekülen zu Werkstoffen. Hüthing & Wepf Verlag, 1996, 202 ff
- **H. FIKENTSCHER.** *Cellulosechemie,* 1932, vol. 13, 58
- **W. PHILIPPOFF.** Viskosität der Kolloide. Verlag, 1942, 172
- **P. J. FLORY.** Principles of Polymer Chemistry. Cornell University Press, 1953, 308 ff
- **H.-G. ELIAS.** Polymere, Von Monomeren und Makromolekülen zu Werkstoffen. Hüthing & Wepf Verlag, 1996, 197 ff